# EUROPÄISCHE PATENTSCHRIFT

(11) **EP 3 997 580 B1**
(45) Veröffentlichungstag und Bekanntmachung des Hinweises auf die Patenterteilung: **21.06.2023**
(21) Anmeldenummer: 20734757.6
(22) Anmeldetag: 30.06.2020
(51) Int. Cl.: G06F 13/42

(54) **VERFAHREN UND DATENNETZWERK ZUM KOMMUNIZIEREN VON DATENINHALTEN, INSBESONDERE IN EINER AUFZUGANLAGE**
METHOD AND DATA NETWORK FOR COMMUNICATING DATA CONTENT, IN PARTICULAR IN A LIFT ASSEMBLY
PROCÉDÉ ET RÉSEAU DE DONNÉES PERMETTANT DE COMMUNIQUER UN CONTENU DE DONNÉES, EN PARTICULIER DANS UNE INSTALLATION D'ASCENSEUR

(30) Priorität: 11.07.2019 EP 19185769
(43) Veröffentlichungstag der Anmeldung: 18.05.2022
(73) Patentinhaber: INVENTIO AG, 6052 Hergiswil (CH)
(72) Erfinder: HOSEMANN, Axel, 5644 Auw (CH); KRUMMENACHER, André, 6206 Neuenkirch (CH)
(74) Vertreter: Inventio AG
(86) Internationale Anmeldenummer: PCT/EP2020/068379
(87) Internationale Veröffentlichungsnummer: WO 2021/004835

(56) Entgegenhaltungen:
- EP-A1- 3 048 536
- EP-A2- 1 892 872
- US-A1- 2009 210 596
- US-A1- 2017 222 829

## Beschreibung

Die vorliegende Erfindung betrifft ein Verfahren zum Kommunizieren von Dateninhalten innerhalb eines Datennetzwerks. Ferner betrifft die Erfindung ein Datennetzwerk, welches zur Durchführung des erfindungsgemässen Verfahrens konfiguriert ist. Weiterhin betrifft die Erfindung eine Aufzuganlage, welche mit einem solchen Datennetzwerk ausgestattet ist.

Datennetzwerke werden insbesondere dazu eingesetzt, um zwischen verschiedenen Geräten bzw. Maschinen Daten oder Signale auszutauschen. Beispielsweise können verteilt angeordnete Feldgeräte Daten mit einer zentralen Steuerung und/oder untereinander über ein Datennetzwerk austauschen. Jedes der Feldgeräte kann dabei beispielsweise über einen Sensor und/oder einen Aktor verfügen. Von dem Sensor aufgenommene Messdaten oder andere Signale können dann über das Datennetzwerk zu der Steuerung übertragen werden. Alternativ oder ergänzend können Daten beispielsweise in Form von Steuersignalen von der Steuerung zu dem Sensor oder einem Aktor übermittelt werden.

Nachfolgend werden mögliche Ausgestaltungen eines Datennetzwerkes sowie eines Verfahrens, um mithilfe des Datennetzwerkes Dateninhalte zu kommunizieren, am Beispiel eines Datennetzwerkes in einer Aufzuganlage beschrieben. Es ist jedoch darauf hinzuweisen, dass Ausführungsformen des hierin beschriebenen Datennetzwerks sowie des damit durchführbaren Kommunikationsverfahrens auch in verschiedenen anderen Applikationen eingesetzt werden können. Der hierin beschriebene Ansatz eignet sich dabei besonders für Applikationen, bei denen eine Vielzahl von Feldgeräten mit einer Steuerung kommunizieren soll und die Feldgeräte dabei relativ weit voneinander beabstandet angeordnet sind.

In einer Aufzuganlage werden Verlagerungen einer Aufzugkabine entlang eines Aufzugschachts im Regelfall zentral von einer Steuerung bewirkt, welche einen Betrieb einer Antriebsmaschine, mithilfe derer die Aufzugkabine verlagert wird, steuert. Um dabei insbesondere eine Sicherheit beim Betrieb der Aufzuganlage gewährleisten zu können, sind über die Aufzuganlage verteilt meist viele Sicherheitseinrichtungen in Form von beispielsweise Sensoren, Detektoren und/oder Sicherheitsschaltern angeordnet, mithilfe derer lokale Bedingungen innerhalb der Aufzuganlage erkannt werden können.

Beispielsweise ist bei Aufzuganlagen, bei denen die Aufzugkabine eine Vielzahl von Stockwerken anfahren kann, an jedem der Stockwerke eine Stockwerktür vorgesehen, die einen Zugang zwischen einem Stockwerkflur und dem Aufzugschacht wahlweise blockieren oder freigeben kann. Die Aufzugkabine soll hierbei ausschliesslich dann verlagert werden dürfen, wenn die Stockwerktüren an allen Stockwerken geschlossen sind. Hierzu kann an jeder Stockwerktür beispielsweise ein so genannter Türsensor oder Türschalter vorgesehen sein, der ein geeignetes Signal erzeugt, wenn die zugehörige Stockwerktür korrekt geschlossen und verriegelt ist.

Herkömmlich wurden solche Türschalter in Serie verschaltet, um eine Sicherheitskette zu bilden. Die Sicherheitskette konnte von der Aufzugsteuerung überwacht werden und ein Verlagern der Aufzugkabine nur zugelassen werden, wenn die gesamte Sicherheitskette und somit alle darin eingegliederten Türschalter geschlossen war.

Allerdings war bei der beschriebenen herkömmlichen Realisierung der Sicherheitskette im Allgemeinen in dem Fall, bei dem die Sicherheitskette unterbrochen war, nicht ohne weiteres erkennbar, welcher der darin integrierten Türschalter aktuell geöffnet ist und die Unterbrechung bewirkt. Ausserdem wurden innerhalb der Sicherheitskette bisher lediglich die sehr einfachen kurzen Informationen bzgl. der Schliesszustände der Aufzugtüren übermittelt, nicht jedoch weitergehende Informationen.

Es ist bei Aufzuganlagen ferner üblich, weitere Sensoren oder andere sicherheitsrelevante Einrichtungen vorzusehen, mithilfe derer beispielsweise lokal vorherrschende Bedingungen in der Aufzuganlage gemessen werden können, sodass die dies betreffenden Informationen von der Aufzugsteuerung genutzt werden können. Beispielsweise können an jedem Stockwerk Sensoren vorgesehen sein, mithilfe derer festgestellt werden kann, ob sich die Aufzugkabine an dem betreffenden Stockwerk innerhalb eines Toleranzbereichs oberhalb oder unterhalb einer Stoppposition befindet. Diese Information kann beispielsweise genutzt werden, um Aufzugtüren bereits kurz vor Erreichen der Stoppposition öffnen lassen zu können. In diesem Fall muss die Aufzugsteuerung jedoch wissen, von welchem der vielen Sensoren ein entsprechendes Signal stammt. Herkömmlich kann dies dazu führen, dass jeder der Sensoren einzeln und somit aufwendig mit der Steuerung verdrahtet werden muss.

Um unter anderem die genannten Nachteile zu überwinden, werden in modernen Aufzuganlagen Datennetzwerke eingesetzt, über die dann ein Austausch von Daten und Signalen zwischen einer Vielzahl von Sensoren und der Aufzugsteuerung erfolgen kann.

Unter einem Datennetzwerk kann in diesem Zusammenhang ein Zusammenschluss verschiedener technischer, primär selbstständiger elektronischer Systeme wie beispielsweise Computer, Sensoren, Aktoren, Agenten und sonstiger elektronischer Komponenten verstanden werden, wobei der Zusammenschluss die Kommunikation der einzelnen Systeme untereinander ermöglicht. Ziel kann hierbei eine gemeinsame Nutzung von Ressourcen sein. Die Kommunikation erfolgt dabei typischerweise unter Verwendung vorgegebener Protokolle, die unter anderem angeben, in welcher Weise Dateninhalte strukturiert und übermittelt werden sollen. Die Dateninhalte werden dabei als Nutzdaten meist in ein sogenanntes Datentelegramm mit einer durch das Protokoll vorgegebenen Struktur eingebettet. In dem Datennetzwerk ist dabei meist eine hierarchische Verwaltung bezüglich eines Zugriffs auf eine gemeinsame Ressource implementiert, bei der ein Teilnehmer des Datennetzwerkes als Mastereinheit agiert und alle anderen Teilnehmer als Slaveeinheiten fungieren. Die Mastereinheit hat als einzige das Recht, unaufgefordert auf die gemeinsame Ressource wie beispielsweise einen gemeinsam zu nutzenden Datenübertragungskanal zuzugreifen. Die Slaveeinheiten können von sich aus im Regelfall nicht auf die gemeinsame Ressource zugreifen, sondern müssen warten, bis sie von der Mastereinheit gefragt werden, oder über eine an der gemeinsamen Ressource vorbeigehende Verbindung der Mastereinheit anzeigen, dass sie gefragt werden wollen.

Über das Datennetzwerk können dabei zusätzlich zu den sicherheitsrelevanten Informationen, die herkömmlich innerhalb der Sicherheitskette übertragen wurden, auch weitere nicht-sicherheitsrelevante Informationen übermittelt werden. Beispielsweise können über das Datennetzwerk umfängliche nicht-sicherheitsrelevante Informationen für eine komplexe Rufanlage einer Aufzuganlage zum Beispiel mit einer Bildanzeige an Touchpads übertragen werden.

Herkömmlich wurden in diesem Kontext Datennetzwerke eingesetzt, die beispielsweise eine CAN-Bus-Architektur (CAN - Controller Area Network) nutzten.

Bei noch moderneren Aufzuganlagen wird angestrebt, alternative Datennetzwerke einzusetzen, welche beispielsweise kostengünstiger sind, einfacher zu installieren sind, Vorteile bei einer Fehleranalyse bieten und/oder eine höhere oder sicherere Datenübertragung ermöglichen.

Beispielsweise wurden Datennetzwerke entwickelt, welche als Ethernet bekannt sind. Insbesondere wurde ein Ethernet Standard IEEE802.3bw. 100BASE-T1 entwickelt, der eine schnelle und robuste Datenkommunikation über kurze Distanzen ermöglicht. Dabei wurden diese Datennetzwerke oft im Hinblick auf Anforderungen, wie sie bei Automotive-Anwendungen anzutreffen sind, entwickelt. Insbesondere wurden für solche Datennetzwerke spezielle elektronische Bauelemente entwickelt, die auch als physikalische Anbindung (englisch: physical layer) oder kurz als PHY bezeichnet werden. Solche PHYs sind inzwischen Standardbauelemente und kostengünstig erhältlich.

Es erscheint vorteilhaft, die bereits bekannten und insbesondere für Automotive-Anwendungen fertig entwickelten und kostengünstigen elektronischen Bauelemente, insbesondere PHYs, auch für Datennetzwerke für andere Anwendungen, insbesondere für eine Anwendung in Aufzuganlagen, einsetzen zu können.

Dabei wirkt sich jedoch erschwerend aus, dass die für einen Einsatz in Automobilen entwickelten Datennetzwerke und ihre elektronischen Bauelemente, insbesondere deren PHYs, für eine Datenübertragung über lediglich kurze Distanzen von typischerweise weniger als 15 m entwickelt wurden. Bei einem in einer Aufzuganlage einzusetzenden Datennetzwerk sind jedoch typischerweise an jedem Stockwerk ein oder mehrere Sensoren vorgesehen, welche über das Datennetzwerk mit einer verhältnismässig weit entfernten Steuerung kommunizieren sollen. Wenn das Datennetzwerk beispielsweise aus einer Vielzahl in Serie verschalteter elektronischer Bauelemente gebildet wird, erscheint es daher notwendig, ein über das Datennetzwerk zu übertragendes Signal an jedem Stockwerk zu repetieren bzw. wieder zu verstärken. Hierzu wäre bei einem herkömmlichen Ethernet-Datennetzwerk beispielsweise ein elektronisches Bauelement notwendig, bei dem ein Mikrokontroller einen ankommenden Datensatz bzw. eine ankommende Signalfolge einliest, dann eine zur Prüfung der Integrität der übermittelten Daten mitgeschickte Prüfsumme (beispielsweise eine Ethernet CRC32) verifiziert und gegebenenfalls Daten aus dem Datensatz ausliest bzw. eigene Daten in den Datensatz einspeichert und anschliessend den Datensatz gegebenenfalls mit einer verstärkten Signalstärke und/oder einer neuen Prüfsumme hin zu einem nächsten elektronischen Bauelement mit einer neuen Adresse übermittelt. Ein hierfür einzusetzender Zyklus führt bei einem Datensatz von beispielsweise 1500 Bytes bereits zu einer signifikanten zeitlichen Verzögerung. Bei Anwendungen wie beispielsweise in sehr hohen Aufzuganlagen, bei denen sehr viele Wiederholungen (beispielsweise mehr als 100 Wiederholungen) an einer Vielzahl von in Serie verschalteten elektronischen Bauelementen implementiert werden müssen, können auf diese Weise selbst bei hohen Datenübertragungsraten von beispielsweise 100 Mbps erhebliche Verzögerungen bei einer Datenübertragung von einem entfernten Bauelement über eine Vielzahl von dazwischenliegenden Bauelementen bis hin zu einer zentralen Steuerung bewirkt werden. Es können Verzögerungen im Millisekundenbereich, beispielsweise von einigen Zehn Millisekunden, bewirkt werden. Dies kann eine schnelle und/oder zuverlässige Funktion der Datenübertragung bei solchen Anwendungen hemmen oder sogar verhindern.

Für spezielle Anwendungsfälle wurden weiterentwickelte Datennetzwerke einschliesslich darin verwendbarer Datenübertragungsprotokollen entwickelt. Beispielsweise ist ein spezieller Ethernet-Feldbus unter dem Namen "EtherCAT" bekannt, der eine sehr schnelle Datenübertragung, eine weitgehend freie Wahl einer hierbei einzusetzenden Topologie, eine vielseitige Anwendbarkeit, eine einfache Implementierung, verhältnismässig geringe Kosten für die hierbei einzusetzenden elektronischen Bauelemente, eine hohe funktionale Sicherheit und/oder weitere Vorteile ermöglicht.

Ferner ist in der DE 10 2010 003 448 A1 ein Adressierungsverfahren und ein Kommunikationsnetzwerk mit einem solchen Adressierungsverfahren beschrieben und in der DE 10 2015 117 937 B3 sind ein Kommunikationsnetzwerk, ein Verfahren zum Betreiben eines solchen Kommunikationsnetzwerks und Teilnehmer in einem Kommunikationsnetzwerk beschrieben.

Die US 2017/0222829 A1 beschreibt ein Verfahren zum Kommunizieren von Dateninhalten innerhalb eines Datennetzwerks, bei dem die Teilnehmer seriell miteinander zu einer Kette verbunden sind. Ein von einem Teilnehmer gesendetes Datagramm wird an ein zuvor von dem Teilnehmer empfangenes Datentelegramm angehängt.

Es kann unter anderem ein Bedarf an einem alternativen Verfahren zum Kommunizieren von Dateninhalten innerhalb eines Datennetzwerkes sowie an einem für eine solche Datenkommunikation konfigurierten Datennetzwerk bestehen. Insbesondere kann ein Bedarf an einem Verfahren zum Kommunizieren von Dateninhalten innerhalb eines Datennetzwerkes sowie an einem für eine solche Datenkommunikation konfigurierten Datennetzwerk bestehen, bei dem vorzugsweise unter Einsatz einfach und kostengünstig verfügbarer elektronischer Bauelemente ein schneller und zuverlässiger Austausch von Daten, insbesondere auch über längere Distanzen von mehreren zehn Metern bis hin zu mehreren hundert Metern, ermöglicht wird. Ferner kann ein Bedarf an einem Kommunikationsverfahren bzw. Datennetzwerk bestehen, welches einfach konfigurierbar und/oder flexibel an verschiedene Anwendungsbedingungen anpassbar ist. Weiterhin kann ein Bedarf an einer Aufzuganlage bestehen, welche mit einem solchen Datennetzwerk ausgestattet ist.

Einem solchen Bedarf kann durch einen der Gegenstände gemäss einem der unabhängigen Ansprüche entsprochen werden. Vorteilhafte Ausführungsformen sind in den abhängigen Ansprüchen sowie der nachfolgenden Beschreibung definiert.

Gemäss einem ersten Aspekt der Erfindung wird ein Verfahren zum Kommunizieren von Dateninhalten innerhalb eines Datennetzwerkes, insbesondere in einer Aufzuganlage, vorgeschlagen. Das Datennetzwerk weist hierbei eine Mastereinheit und mehrere Slaveeinheiten auf. Die Mastereinheit und die Slaveeinheiten sind über Datenkommunikationspfade miteinander verbunden, um Datentelegramme aus einer Vielzahl von Bits zwischen einander auszutauschen. Jedes Datentelegramm umfasst einen Header, einen Datagrammbereich und eine Prüfsumme. Der Datagrammbereich ist dabei zum seriellen Speichern mehrerer Datagramme konfiguriert. Jedes Datagramm umfasst einen zu kommunizierenden Dateninhalt. Die Prüfsumme ist auf Basis der Bits im Rest des Datentelegramms eindeutig zu berechnen. Die Mastereinheit und die Slaveeinheiten sind über die Datenkommunikationspfade seriell miteinander zu einer Kette verbunden. Die Mastereinheit überträgt hierbei auf einem Datenhinweg hin zu einer letzten Slaveeinheit ein Datentelegramm an eine erste Slaveeinheit. Jede der Slaveeinheiten mit Ausnahme der letzten Slaveeinheit leitet ein aus einer Richtung von der Mastereinheit an einem ersten Datenanschluss empfangenes Datentelegramm über einen zweiten Datenanschluss in die Richtung hin zu der letzten Slaveeinheit weiter. Die letzte Slaveeinheit leitet einen Datenrückweg ein, indem sie ein aus der Richtung von der Mastereinheit an einem ersten Datenanschluss empfangenes Datentelegramm über den ersten Datenanschluss hin in eine Richtung zu der Mastereinheit zurückleitet. Während des Datenrückwegs leitet jede der Slaveeinheiten ein aus einer Richtung von der letzten Slaveeinheit an dem zweiten Datenanschluss empfangenes Datentelegramm über den ersten Datenanschluss in die Richtung hin zu der Mastereinheit weiter. Die Slaveeinheiten weisen eine Prozessoreinheit zum Weiterleiten und Modifizieren des Datentelegramms auf. Zumindest eine, insbesondere alle Prozessoreinheiten sind dazu konfiguriert, auf dem Datenhinweg das Datentelegramm einzulesen und auszuwerten und wenn das Datentelegramm eine Aufforderung an die jeweilige Slaveeinheit enthält, auf dem Datenrückweg Informationen an die Mastereinheit zu übermitteln, unmittelbar nach dem Empfangen und Auswerten der entsprechenden Anweisung zu beginnen, die angeforderten Informationen zusammenzustellen.

Gemäss einem zweiten Aspekt der Erfindung wird ein Datennetzwerk zum Kommunizieren von Dateninhalten innerhalb des Datennetzwerkes, insbesondere in einer Aufzuganlage, vorgeschlagen. Das Datennetzwerk ist dazu konfiguriert, ein Verfahren gemäss einer Ausführungsform des ersten Aspekts der Erfindung auszuführen.

Ein solches Datennetzwerk zum Kommunizieren von Dateninhalten innerhalb des Datennetzwerkes, insbesondere in einer Aufzuganlage, weist eine Mastereinheit und mehrere Slaveeinheiten auf. Die Mastereinheit und die Slaveeinheiten sind über Datenkommunikationspfade miteinander verbunden, um Datentelegramme aus einer Vielzahl von Bits zwischen einander auszutauschen. Jedes Datentelegramm umfasst dabei wie bereits oben angegeben einen Header, einen Datagrammbereich und eine Prüfsumme. Die Mastereinheit und die Slaveeinheiten sind über die Datenkommunikationspfade seriell miteinander zu einer Kette verbunden. Die Mastereinheit weist eine Master-Prozessoreinheit und zumindest einen Datenanschluss auf und jede der Slaveeinheiten weist eine Prozessoreinheit und einen ersten und einen zweiten Datenanschluss auf. Die Mastereinheit ist dazu konfiguriert, auf einem Datenhinweg hin zu einer letzten Slaveeinheit ein Datentelegramm über ihren Datenanschluss an eine erste Slaveeinheit zu übertragen. Jede der Slaveeinheiten mit Ausnahme der letzten Slaveeinheit ist dazu konfiguriert, ein aus einer Richtung von der Mastereinheit an ihrem ersten Datenanschluss empfangenes Datentelegramm über ihren zweiten Datenanschluss in die Richtung hin zu der letzten Slaveeinheit weiterzuleiten und ein aus einer Richtung von der letzten Slaveeinheit an dem zweiten Datenanschluss empfangenes Datentelegramm über den ersten Datenanschluss in die Richtung hin zu der Mastereinheit weiterzuleiten. Die letzte Slaveeinheit ist dazu konfiguriert, einen Datenrückweg einzuleiten, indem sie ein aus der Richtung von der Mastereinheit an ihrem ersten Datenanschluss empfangenes Datentelegramm über den ersten Datenanschluss hin in eine Richtung zu der Mastereinheit zurückleitet. Jede der Slaveeinheiten ist dazu konfiguriert, das Datentelegramm ausschliesslich während des Datenrückwegs zu modifizieren und zumindest eine, insbesondere alle Prozessoreinheiten der Slaveeinheiten sind dazu konfiguriert, auf dem Datenhinweg das Datentelegramm einzulesen und auszuwerten und wenn das Datentelegramm eine Aufforderung an die jeweilige Slaveeinheit enthält, auf dem Datenrückweg Informationen an die Mastereinheit zu übermitteln, unmittelbar nach dem Empfangen und Auswerten der entsprechenden Anweisung zu beginnen, die angeforderten Informationen zusammenzustellen.

Gemäss einem dritten Aspekt der Erfindung wird eine Aufzuganlage mit einem Datennetzwerk gemäss einer Ausführungsform des zweiten Aspekts der Erfindung vorgestellt.

Mögliche Merkmale und Vorteile von Ausführungsformen der Erfindung können unter anderem und ohne die Erfindung einzuschränken als auf nachfolgend beschriebenen Ideen und Erkenntnissen beruhend angesehen werden.

Wie einleitend bereits angemerkt wird angestrebt, moderne Datennetzwerk-Strukturen bei Anwendungen wie beispielsweise in hohen Aufzuganlagen einzusetzen, bei denen Daten über lange Distanzen übermittelt werden sollen und dabei viele Teilnehmer in Form elektronischer Bauelemente in dem Datennetzwerk integriert sein sollen.

Die Teilnehmer des Datennetzwerkes sind dabei über einen oder mehrere Datenkommunikationspfade, welche auch als Datenübertragungskanäle bezeichnet werden können, miteinander verbunden, sodass Daten zwischen den Teilnehmern ausgetauscht werden können. Ein Datenkommunikationspfad kann dabei technisch in unterschiedlicher Weise implementiert werden, beispielsweise durch zwischen den Teilnehmern verlaufende Kabel. Meist werden hierbei benachbarte Teilnehmer über zwei oder mehr Kabel miteinander verdrahtet.

Bei herkömmlichen Datennetzwerken, die beispielsweise gemäss dem Ethernet-Standard funktionieren, werden zu übermittelnde Dateninhalte zwischen einem als Sender fungierenden elektronischen Bauelement und einem als Empfänger fungierenden Bauelement ausgetauscht. Der Sender kann dabei eine in einer Hierarchie übergeordnete Mastereinheit sein und der Empfänger kann eine untergeordnete Slaveeinheit sein. In bestimmten Konstellationen, wie beispielsweise in Reaktion auf eine Anfrage von der Mastereinheit, kann jedoch auch eine Slaveeinheit als Sender agieren und Dateninhalte an die Mastereinheit oder eine andere Slaveeinheit senden.

Die Dateninhalte sind dabei üblicherweise in ein Datentelegramm eingebettet. Das Datentelegramm umfasst im Allgemeinen zumindest einen Header, einen Datagrammbereich und eine Prüfsumme. Der Header umfasst meist unter anderem Informationen, die für die geordnete Durchführung der Datenkommunikation nötig sind, wie z.B. eine Zieladresse, eine Typangaben, etc. Der Datagrammbereich ist dazu vorgesehen, die mit dem Datentelegramm zu übermittelnden Dateninhalte in Form von Datagrammen quasi als Nutzlast aufzunehmen. Dabei können in dem Datagrammbereich mehrere Datagramme eingespeichert werden. Die Prüfsumme, wie beispielsweise eine CRC32 (Cyclic Redundancy Check mit 32 Bit), dient zur Fehlerdetektion, wird für jedes Datentelegramm individuell berechnet und ergibt sich eindeutig aus einer Berücksichtigung aller in dem Datentelegramm enthaltener Bitwerte.

Bei einem herkömmlichen Datennetzwerk schickt ein an dem Datennetzwerk teilnehmendes Bauelement ein solches Datentelegramm unter Angabe einer Zieladresse an ein benachbartes, ebenfalls an dem Datennetzwerk teilnehmendes Bauelement. Dort wird das Datentelegramm typischerweise vollständig eingelesen. Anschliessend kann die Integrität der übermittelten Daten überprüft werden, indem die mitgeschickte Prüfsumme mit den Bitwerten in dem Datentelegramm verglichen wird und somit der Inhalt des Datentelegramms auf Korrektheit überprüft wird. Erst nachdem diese beiden Prozessschritte abgeschlossen sind, werden dann typischerweise aus dem übermittelten Datentelegramm diejenigen Daten extrahiert, die von dem jeweiligen Bauelement erwartet werden bzw. die an das jeweilige Bauelement adressiert sind. Ergänzend oder alternativ können von dem Bauelement eigene Daten in das Datentelegramm eingespeichert werden, wobei typischerweise für jedes an dem Datennetzwerk teilnehmende Bauelement ein eigens zugeordneter Speicherbereich innerhalb des Datentelegramm vorgesehen ist, in den dieses Bauelement seine Daten einspeichern soll. Bevor das Bauelement das gegebenenfalls modifizierte Datentelegramm an das nächste Bauelement weiterleitet, berechnet es eine aktualisierte Prüfsumme und fügt diese dem Datentelegramm bei.

Das beschriebene Vorgehen in herkömmlichen Datennetzwerken ist zwar zuverlässig und daher weit verbreitet, es bringt aber einen erheblichen Datenverarbeitungsaufwand mit sich. Insbesondere bei Anwendungen, bei denen sehr viele Teilnehmer über ein Datennetzwerk Daten übermitteln können sollen, und weiterhin insbesondere für den Fall, dass von jedem dieser Teilnehmer jeweils nur sehr kurze Datensätze, d.h. wenige Daten, übermittelt werden sollen, kommt es bei herkömmlichen Datennetzwerken zu erheblichen zeitlichen Verzögerungen bei der Datenübertragung. Dies kann insbesondere daher rühren, da die eigentlichen Nutzdaten nur einen geringen Anteil an den insgesamt über das Datennetzwerk zu übertragenden und von den Netzwerkteilnehmern zu verarbeitenden Daten ausmachen. Eine für die Übertragung der weiterzuleitenden Dateninhalte effektiv genutzte Bandbreite in dem Datennetzwerk kann hierdurch erheblich reduziert sein.

Beim erfindungsgemässen Datenkommunikationsverfahrens sind die Mastereinheit und die Slaveeinheiten über die Datenkommunikationspfade seriell miteinander zu einer Kette verbunden. Die Mastereinheit überträgt hierbei auf einem Datenhinweg hin zu einer letzten Slaveeinheit ein Datentelegramm an eine erste Slaveeinheit. Jede der Slaveeinheiten mit Ausnahme der letzten Slaveeinheit leitet ein aus einer Richtung von der Mastereinheit an einem ersten Datenanschluss empfangenes Datentelegramm über einen zweiten Datenanschluss in die Richtung hin zu der letzten Slaveeinheit weiter. Die letzte Slaveeinheit leitet einen Datenrückweg ein, indem sie ein aus der Richtung von der Mastereinheit an einem ersten Datenanschluss empfangenes Datentelegramm über den ersten Datenanschluss hin in eine Richtung zu der Mastereinheit zurückleitet. Während des Datenrückwegs leitet jede der Slaveeinheiten ein aus einer Richtung von der letzten Slaveeinheit an dem zweiten Datenanschluss empfangenes Datentelegramm über den ersten Datenanschluss in die Richtung hin zu der Mastereinheit weiter.

Bei einem zur Ausführung eines derart ausgestalteten Datenkommunikationsverfahrens konfigurierten Datennetzwerk verfügt die Mastereinheit über eine Master-Prozessoreinheit und zumindest einen Datenanschluss und jede der Slaveeinheiten verfügt über eine Prozessoreinheit und den ersten und den zweiten Datenanschluss. Die Mastereinheit ist dabei dazu konfiguriert, ein Datentelegramm auf dem Datenhinweg hin zu der letzten Slaveeinheit über ihren Datenanschluss an eine erste Slaveeinheit zu übertragen. Jede der Slaveeinheiten mit Ausnahme der letzten Slaveeinheit ist dazu konfiguriert, insbesondere während des Datenhinwegs ein aus der Richtung von der Mastereinheit an ihrem ersten Datenanschluss empfangenes Datentelegramm über ihren zweiten Datenanschluss in die Richtung hin zu der letzten Slaveeinheit weiterzuleiten und insbesondere während des Datenrückwegs ein aus einer Richtung von der letzten Slaveeinheit an dem zweiten Datenanschluss empfangenes Datentelegramm über den ersten Datenanschluss in die Richtung hin zu der Mastereinheit weiterzuleiten. Ferner ist die letzte Slaveeinheit dazu konfiguriert, den Datenrückweg einzuleiten, indem sie ein aus der Richtung von der Mastereinheit an ihrem ersten Datenanschluss empfangenes Datentelegramm über den ersten Datenanschluss hin in eine Richtung zu der Mastereinheit zurückleitet.

Anders ausgedrückt kann die Topologie des hierin vorgestellten Datennetzwerks linear sein. An einer ersten Seite des Datennetzwerks, welche auch als Anfang oder oberes Ende bezeichnet werden kann, befindet sich dabei die Mastereinheit. An einer entgegengesetzten zweiten Seite des Datennetzwerks, welche auch als Ende oder unteres Ende bezeichnet werden kann, befindet sich die letzte Slaveeinheit. Zwischen der Mastereinheit und der letzten Slaveeinheit befinden sich mehrere weitere Slaveeinheiten. Zumindest die genannten weiteren Slaveeinheiten sind dabei vorzugsweise alle gleich aufgebaut. Jede der genannten weiteren Slaveeinheiten verfügt vorzugsweise über zumindest zwei Datenanschlüsse. Dabei ist jede der genannten weiteren Slaveeinheit mit zwei benachbarten Slaveeinheiten über Datenkommunikationspfade verbunden, wobei eine vorangehende Slaveeinheit mit dem ersten Datenanschluss und eine nachfolgende Slaveeinheit mit dem zweiten Datenanschluss dieser Slaveeinheit verbunden ist. Ausnahmen bilden die erste Slaveeinheit sowie die letzte Slaveeinheit. Die erste Slaveeinheit ist mit ihrem ersten Datenanschluss mit der Mastereinheit verbunden und mit ihrem zweiten Datenanschluss mit einer benachbarten zweiten Slaveeinheit verbunden. Die letzte Slaveeinheit ist mit ihrem ersten Datenanschluss mit einer benachbarten vorletzten Slaveeinheit verbunden, wohingegen ihr optional vorhandener zweiter Datenanschluss mit keiner benachbarten Slaveeinheit verbunden ist.

Ein Datennetzwerk mit der beschriebenen linearen, kettenartigen Topologie und das damit umsetzbare Kommunikationsverfahren eignen sich besonders für Anwendungen, in denen Slaveeinheiten entlang langer Distanzen verteilt angeordnet sind und/oder Dateninhalte sukzessive an eine Vielzahl von Slaveeinheiten weitergereicht werden sollen. Damit eignen sich derartige kettenartige Datennetzwerke insbesondere für einen Anwendungsfall in einer Aufzuganlage, bei der Slaveeinheiten beispielsweise an jedem Stockwerk vorgesehen sein und seriell mit benachbarten Slaveeinheiten an benachbarten Stockwerken verbunden sein können. Die Mastereinheit kann mit einer ersten Slaveeinheit an einem obersten oder einem untersten Stockwerk verbunden sein und die letzte Slaveeinheit kann sich entsprechend an dem entgegengesetzten untersten bzw. obersten Stockwerk befinden.

Bei einem Datennetzwerk mit einer derartigen kettenartigen Topologie kann ein Datentelegramm von der Mastereinheit zunächst an die erste Slaveeinheit übermittelt werden. Das Datentelegramm kann dann von der ersten Slaveeinheit sukzessive an nachfolgende Slaveeinheiten weitergereicht werden, bis es schliesslich die letzte Slaveeinheit erreicht. Der dabei zurückgelegte Weg wird als Datenhinweg bezeichnet. Die letzte Slaveeinheit erkennt ihre Eigenschaft als letzte Slaveeinheit beispielsweise daran, dass ihr ein zweiter Nachbar fehlt, d.h., dass an ihren zweiten Datenanschluss keine weitere Slaveeinheit angeschlossen ist. Wenn die letzte Slaveeinheit das Datentelegramm empfängt, leitet sie es somit nicht an ihrem zweiten Datenanschluss weiter, sondern schickt es über ihren ersten Datenanschluss zurück an die vorangehende Slaveeinheit. Hierdurch leitet die letzte Slaveeinheit den Datenrückweg ein. Das Datentelegramm wird dann in entgegengesetzter Richtung wiederum von Slaveeinheit zu Slaveeinheit weitergereicht, bis es letztendlich von der ersten Slaveeinheit an die Mastereinheit übermittelt wird.

Die beschriebene kettenartige Topologie des Datennetzwerks und das hiermit umzusetzende Datenkommunikationsverfahren sind insbesondere dann vorteilhaft, wenn jede der Slaveeinheiten dazu konfiguriert ist, das Datentelegramm ausschliesslich während des Datenrückwegs zu modifizieren bzw. das Datentelegramm von den Slaveeinheiten ausschliesslich während des Datenrückwegs modifiziert wird.

Anders ausgedrückt ist das Datennetzwerk mit seinen Slaveeinheiten derart konfiguriert, dass Datentelegramme auf dem Datenhinweg nicht modifiziert werden, sondern lediglich unverändert von Slaveeinheit zu Slaveeinheit weitergereicht werden, bis sie die letzte Slaveeinheit erreicht haben. Dabei erkennt jede der Slaveeinheiten, dass sie ein Datentelegramm an ihrem ersten Datenanschluss empfängt und reicht dieses daraufhin insbesondere im Wesentlichen verzögerungsfrei, d. h. on-the-fly, weiter zu ihrer gegenüberliegend benachbarten Slaveeinheit. Der Datenhinweg wird damit in einem so genannten Broadcast-Verfahren durchgeführt. Nachdem die letzte Slaveeinheit den Datenrückweg eingeleitet hat, empfangen die Slaveeinheiten dann das Datentelegramm an ihrem zweiten Datenanschluss. Auf dem Datenrückweg speichern die Slaveeinheiten dann die von ihnen zu übermittelnden Dateninhalte in Form von Datagrammen in das Datentelegramm ein.

Durch die beschriebene Vorgehensweise, Slaveeinheiten ihre Dateninhalte ausschliesslich während des Datenrückwegs in die Datentelegramm einspeichern zu lassen, kann eine Datenübertragung zwischen der Mastereinheit und den Slaveeinheiten sehr effizient und schnell etabliert werden. Auf dem Datenhinweg können die Slaveeinheiten dabei zwar die Daten in dem durchgeleiteten Datentelegramm mithören, die Daten werden jedoch nicht modifiziert, sondern schnellstmöglich weitergeleitet. Somit erreicht das Datentelegramm innerhalb sehr kurzer Zeit die letzte Slaveeinheit. Erst indem das Datentelegramm durch die letzte Slaveeinheit zurückgeleitet wird, können dann die Slaveeinheiten auf dem Datenrückweg bei Bedarf ihre Dateninhalte in das Datentelegramm einspeichern.

Das Mithören der Daten kann auch eine Aufforderung in Form eines Pollings an bestimmte, adressierte Slaveeinheiten bewirken, damit diese von sich aus Dateninhalte hin zu der Mastereinheit kommunizieren.

Die Slaveeinheiten weisen eine Prozessoreinheit zum Weiterleiten und Modifizieren des Datentelegramms auf. Zumindest eine, insbesondere alle Prozessoreinheiten sind dazu konfiguriert, auf dem Datenhinweg das Datentelegramm einzulesen und auszuwerten und wenn das Datentelegramm eine Aufforderung an die jeweilige Slaveeinheit enthält, auf dem Datenrückweg Informationen an die Mastereinheit zu übermitteln, unmittelbar nach dem Empfangen und Auswerten der entsprechenden Anweisung zu beginnen, die angeforderten Informationen zusammenzustellen. Damit beginnen die Prozessoreinheiten vorteilhafterweise zum frühest möglichen Zeitpunkt mit der Zusammenstellung der angeforderten Information, so dass sie sehr frühzeitig für das Übermitteln an die Mastereinheit bereitgestellt werden können. Die Übermittlung der Informationen erfolgt damit sehr schnell, die Zeit für den Datenrückweg zur Mastereinheit ist also sehr kurz.

Die Bereitstellung der angeforderten Informationen erfolgt dabei insbesondere so, dass der Mikrokontroller die Informationen, beispielsweise Statusinformationen der Slaveeinheit zusammenstellt und an die CPLD übermittelt. Sobald das Datentelegramm auf dem Datenrückweg von der entsprechenden Slaveeinheit weitergeleitet wird, kann die CPLD die angeforderten Informationen quasi ohne Zeitverlust in das Datentelegramm integrieren.

Ohne das beschriebene Bereitstellen der angeforderten Informationen könnte es vorkommen, dass es bei der Übertragung des Datentelegramms durch eine Slaveeinheit zu Verzögerung kommt, insbesondere, dass eine "on-the-fly" Übertragung nicht möglich ist, da die Informationen erst noch von der Prozessoreinheit ermittelt und an eine komplexe programmierbare Logikeinrichtung CPLD (Complex Programmable Logic Device) übertragen werden müssten, was eine gewisse Zeit in Anspruch nehmen würde.

Der hier beschriebene Ansatz wird insbesondere nur für die Übertragung von sicherheitsrelevanten Informationen genutzt. Die die sicherheitsrelevanten Informationen beinhaltenden Datentelegramme werden im Header mit einer speziellen Typangabe (Ethertype) gekennzeichnet. Die so gekennzeichneten Datentelegramme werden dann mit dem beschriebenen Ansatz übertragen. Neben den sicherheitsrelevanten Informationen können im selben Datennetzwerk auch nicht-sicherheitsrelevante Informationen wie in herkömmlichen Datennetzwerken, beispielsweise gemäss dem Ethernet-Standard, übertragen werden. Diese Datentelegramme sind ebenfalls über ihre Typangabe im Header identifizierbar.

Die letzte Slaveeinheit wartet insbesondere vor dem Einleiten des Datenrückwegs eine kurze, einstellbare Zeitspanne, beispielsweise im Bereich zwischen 0,2 und 0,8 Millisekunden, ab. Die genannte Zeitspanne ist insbesondere ab dem Zeitpunkt gerechnet, an dem die letzte Slaveeinheit das Datentelegramm vollständig empfangen hat. Damit kann erreicht werden, dass alle Slaveeinheiten die von der Mastereinheit angeforderten Informationen zusammengestellt haben, bevor der Datenrückweg begonnen hat.

Gemäss einer Ausführungsform des hierin beschriebenen Datenkommunikationsverfahrens kann umfasst das Verfahren zumindest den Verfahrensschritt:
- Empfangen eines Datentelegramms durch eine Slaveeinheit von der Mastereinheit oder von einer benachbarten Slaveeinheit und Weiterleiten von Teilen des Datentelegramms noch während des Empfangens an eine andere benachbarte Slaveeinheit bzw. an die Mastereinheit.

Das Verfahren kann insbesondere die weiteren Verfahrensschritte umfassen:
- Prüfen der Prüfsumme des Datentelegramms;
- Anhängen eines ergänzenden Datagramms hinter ein letztes bereits eingespeichertes Datagramm in dem Datagrammbereich, wobei das ergänzende Datagramm einen von der Slaveeinheit zu kommunizierenden Dateninhalt umfasst; und
- Berechnen einer neuen Prüfsumme auf Basis der Bits im Rest des um das ergänzende Datagramm erweiterten Datentelegramms und Anhängen der neu berechneten Prüfsumme am Ende des Datentelegramms.

Mit anderen Worten soll als erste Massnahme nicht erst ein gesamtes Datentelegramm eingelesen werden müssen, bevor es dann gegebenenfalls modifiziert und letztendlich an einen nachfolgenden Teilnehmer des Datennetzwerkes weitergeleitet wird. Stattdessen sollen Teile des Datentelegramms bereits weitergeleitet werden, während andere Teile des gleichen Datentelegramms noch empfangen werden. Anders ausgedrückt sollen Datentelegramme fliegend, d.h. "on-the-fly", noch während sie in einer der an dem Datennetzwerk teilnehmenden Slaveeinheit empfangen werden, von dieser Tarifeinheit bereits an eine nachfolgende Slaveeinheit bzw. an die Mastereinheit weitergeleitet werden.

Eine zeitliche Verzögerung zwischen dem Empfangen eines Teils eines Datentelegramm, d.h. zum Beispiel eines Bits aus dem Datentelegramm, und einer Weiterleitung dieses Teils des Datentelegramm an einen nachfolgenden Teilnehmer des Datennetzwerkes kann dabei erheblich kürzer sein als die zur Übermittlung des gesamten Datentelegramms notwendige Zeitdauer. Beispielsweise können von einer Slaveeinheit empfangene Daten im Wesentlichen verzögerungsfrei weitergeleitet werden. "Im wesentlichen verzögerungsfrei" kann dabei bedeuten, dass ein zeitlicher Abstand zwischen dem Empfangen und dem Weiterleiten der Daten nur wenige Rechenzyklen in der Slaveeinheit benötigt. Eine Anzahl der benötigten Rechenzyklen kann dabei insbesondere erheblich kleiner sein als die Anzahl insgesamt zum Weiterleiten des gesamten Datentelegramms notwendigen Rechenzyklen. Insbesondere kann zwischen dem Empfangen und dem Weiterleiten ein Zeitversatz von weniger als 500, vorzugsweise weniger als 100, stärker bevorzugt weniger als 20 Rechenzyklen genügen. Bei einer Datenübertragungsbandbreite von beispielsweise 100 Mbps oder sogar deutlich mehr kann der Zeitversatz somit deutlich kürzer als 1 µs sein, d.h. im Bereich von einigen 10 ns bis hin zu einigen 100 ns betragen.

Die Übertragung von Daten "on-the-fly" kann beispielsweise durch ein geeignetes Hardware-Design der hierfür einzusetzenden Slaveeinheiten implementiert werden. Die Slaveeinheiten weisen dazu insbesondere eine Prozessoreinheit auf, die neben einem Mikrokontroller beispielsweise eine komplexe programmierbare Logikeinrichtung CPLD (Complex Programmable Logic Device) und zwei physikalische Anbindungen, d.h. zwei PHYs aufweist. Die CPLD ist insbesondere zwischen den zwei PHYs angeordnet und derart gewählt bzw. konfiguriert, dass sie in der Lage ist, die Weiterleitung von Daten im wesentlichen verzögerungsfrei, das heisst noch während des Empfangs von Daten des gleichen Datentelegramm, durchzuführen.

Als eine zweite Massnahme wird vorgeschlagen, die mit einem Datentelegramm zu übermittelnden Dateninhalte in einer bestimmten Weise in dem Datentelegramm aufzunehmen. Die Art und Weise, wie Slaveeinheiten die von ihnen ermittelten Dateninhalte in das Datentelegramm einspeichern und insbesondere der Ort bzw. der Speicherplatz, an dem diese Dateninhalte eingespeichert werden sollen, unterscheidet sich dabei grundsätzlich von herkömmlichen Ansätzen.

Bei den oben beschriebenen herkömmlichen Ansätzen beispielsweise gemäss dem Ethernet-Standard-Protokoll ist in dem Datennetzwerk im Allgemeinen vorab bekannt und hinterlegt, wie viele Teilnehmer, d.h. insbesondere wie viele Slaveeinheiten, das Datennetzwerk umfasst. Für jeden Teilnehmer ist dabei in einem Datentelegramm eigens ein Speicherbereich vorgesehen, in den dieser Teilnehmer seine Dateninhalte einspeichern soll. Für den Fall, dass eine Slaveeinheit aktuell über keine einzuspeichern Dateninhalte verfügt, bleibt der entsprechende Speicherbereich ungenutzt.

Im Gegensatz zu dem oben beschriebenen herkömmlichen Ansatz werden bei dem hier beschriebenen Ansatz Dateninhalte in Form von Datagrammen nicht an einem bereits zuvor hierfür festgelegten Speicherplatz in dem Datentelegramm eingespeichert. Stattdessen soll jede Slaveeinheit den von ihr zu übermittelnden Dateninhalt in Form eines ergänzenden Datagramms seriell hinter ein letztes bereits eingespeichertes Datagramm in dem Datagrammbereich des Datentelegramms einspeichern. Anders ausgedrückt soll eine Slaveeinheit, wenn sie ein Datentelegramm empfängt, die von ihr mit diesem Datentelegramm mitzuschickenden Dateninhalte in den Datagrammbereich dieses Datentelegramm einfügen und dabei das entsprechende Datagramm direkt hinter den Speicherbereich, in den bereits zuvor andere Slaveeinheiten ihre Datagramme eingespeichert hatten, einspeichern. Mit nochmals anderen Worten soll eine Slaveeinheit das von ihr zu übermittelnde Datagramm in dem Datagrammbereich an bereits zuvor abgespeicherte Datagramme seriell hinten anhängen.

Durch das beschriebene Anhängen von ergänzenden Datagrammen hinter bereits eingespeicherte Dateigramme in dem Datagrammbereich kann die Kommunikation von Dateninhalten flexibler und einfacher konfigurierbar umgesetzt werden. Insbesondere braucht nicht für jede der Slaveeinheiten bereits vorab in dem Datagrammbereich eines Datentelegramms ein eigens zugeordneter Speicherplatz vorgehalten werden. Stattdessen kann ein Datentelegramm anfangs relativ kurz sein und beispielsweise nur den Header und die Prüfsumme sowie gegebenenfalls einen sehr kurzen Datagrammbereich umfassen. Der Datagrammbereich kann anfänglich kein, lediglich ein oder lediglich wenige Datagramme beherbergen. Indem das Datentelegramm sukzessive von Slaveeinheit zu Slaveeinheit weitergereicht wird, hängt jede der Slaveeinheiten gegebenenfalls ihr Datagramm in dem Datagrammbereich an. Hierdurch wächst der Datagrammbereich sukzessive. Eine Länge des Datagrammbereichs passt sich dabei automatisch an eine Menge der von den verschiedenen Slaveeinheiten zu übermittelnden Dateninhalte an.

Im Gegensatz zu dem oben beschriebenen herkömmlichen Ansatz kann somit vermieden werden, dass unnötig lange Datentelegramme mit zum Teil ungenutzten Speicherbereichen in einem Datagrammbereich, in dem bereits vorab für jede Slaveeinheit ein eigener Speicherbereich vorgesehen wurde, über das Datennetzwerk kommuniziert werden brauchen. Stattdessen passen sich das Datentelegramm und insbesondere dessen Datagrammbereich an die aktuellen Erfordernisse hinsichtlich der zu übertragenden Dateninhalte flexibel an und braucht somit diesbezüglich nicht speziell vorab konfiguriert werden.

Datagrammbereich kann ebenfalls einen Header (PT, VERS, LEN) aufweisen Datagramm kann auch einen Header (SRC, CNT) und zusätzlichen einen CRC aufweisen Datagrammbereich kann Payload eines Ethernet-Frames sein

Der hierin beschriebene Ansatz zum Kommunizieren von Dateninhalten innerhalb eines Datennetzwerkes kann sich somit insbesondere hinsichtlich eines Protokolls, gemäss dem Dateninhalte in Datentelegrammen gespeichert werden, in Kombination mit der Art und Weise, wie die Datentelegramme von Slaveeinheit zu Slaveeinheit on-the-fly weitergeleitet werden, unterscheiden.

Insbesondere kann sich dabei das hierfür eingesetzte Datennetzwerk hinsichtlich der Hardwarekomponenten, die zur Umsetzung eines solchen Protokolls und einer solchen Art der Datenweiterleitung konfiguriert sind, von herkömmlichen Datennetzwerken unterscheiden.

Ähnlich wie bei herkömmlichen Datenkommunikationsverfahren bzw. herkömmlichen Datennetzwerken wird die Prüfsumme eines empfangenen Datentelegramms geprüft.

Eine solche Prüfung erfolgt typischerweise, nachdem das gesamte Datentelegramm empfangen wurde. Wird dabei eine Inkonsistenz zwischen den in dem Datentelegramm enthaltenen mit Bitwerten und der Prüfsumme des Datentelegramms festgestellt, kann die fehlende Integrität des Datentelegramms als Information beispielsweise in Form einer Fehlermeldung in das weitergeleitete Datentelegramm eingespeichert werden.

Nachdem ein empfangenes Datentelegramm ferner gegebenenfalls um eigene Dateninhalte bzw. ein eigenes Datagramm ergänzt wurde, wird ferner eine neue Prüfsumme für das um das ergänzende Datagramm erweiterte Datentelegramm berechnet. Diese neue Prüfsumme wird dann am Ende des Datentelegramms angehängt und somit zusammen mit dem Datentelegramm an den nachfolgenden Empfänger übermittelt. Die neue Prüfsumme ersetzt dabei die vorhergehende Prüfsumme.

Das beschriebene Vorgehen, Datentelegramme verzögerungsarm "on-the-fly" zu übermitteln und Datagramme an bereits zuvor in den Datagrammbereich eines Datentelegramms eingespeicherte Dateigramme anzuhängen, ist insbesondere bei Ausführungsformen des Datenkommunikationsverfahrens bzw. des Datennetzwerks gemäss dem ersten bzw. zweiten Aspekt der Erfindung vorteilhaft. Dabei kommt es durch die Kombination von Merkmalen der verzögerungsarmen Datenübermittlung "on-the-fly" sowie des Anhängens von Datagrammen an bereits zuvor in den Datagrammbereich eines Datentelegramms eingespeicherte Dateigramme, einerseits, und des Merkmals der kettenartigen Topologie des Datennetzwerks, andererseits, zu positiven Effekten bzw. Synergien kommen. Beispielsweise kann bei der Anwendung in einer Aufzuganlage ein Datentelegramm sehr schnell von einer Mastereinheit entlang der Kette bis zu der letzten Slaveeinheit geleitet werden und dann die Slaveeinheiten auf dem Datenrückweg ihre Dateninhalte sequenziell geordnet in das Datentelegramm einspeichern.

Gemäss einer Ausführungsform des hierin beschriebenen Datenkommunikationsverfahrens kann jede der Slaveeinheiten dazu konfiguriert sein, von sich aus aktiv eine Datenkommunikation mit der Mastereinheit zu starten und hierzu ein Datentelegramm hin zu der Mastereinheit zu senden. Dabei sollte jede der Slaveeinheiten vor dem aktiven Starten einer Datenkommunikation ein Kollisionshandling durchführen und ausschliesslich dann von sich aus ein Datentelegramm senden, wenn von der Slaveeinheit aktuell kein Datentelegramm empfangen und weitergeleitet wird. Für das Datennetzwerk bedeutet dies, dass jede der Slaveeinheiten dazu konfiguriert ist, vor dem aktiven Starten einer Datenkommunikation ein Kollisionshandling durchzuführen und ausschliesslich dann von sich aus ein Datentelegramm zu senden, wenn von der Slaveeinheit aktuell kein Datentelegramm empfangen und weitergeleitet wird.

Anders ausgedrückt können die Slaveeinheiten jeweils nicht nur dazu in der Lage sein, ausschliesslich dann Dateninhalte an die Mastereinheit weiterzuleiten, wenn sie von dieser durch Empfangen eines Datentelegramms dazu aufgefordert werden. Stattdessen können die Slaveeinheiten auch von sich aus, d.h. spontan, ein Datentelegramm erzeugen und über dazwischenliegende benachbarte Slaveeinheiten an die Mastereinheit senden. Dies versetzt die Slaveeinheiten in die Lage, aktiv Dateninhalte an die Mastereinheit zu übermitteln, falls dies situationsabhängig für notwendig erachtet wird.

Um dabei jedoch zu vermeiden, dass es zu Konflikten zwischen der ansonsten über das Datennetzwerk durchzuführenden Datenkommunikation und der spontan von einer Slaveeinheit zu bewirkenden Datenkommunikation kommt, sollte die Slaveeinheit, bevor sie ihre spontane Datenkommunikation aktiv startet, ein Kollisionshandling durchführen. Bei diesem Kollisionshandling prüft die Slaveeinheit, ob im Rahmen der ansonsten über das Datennetzwerk durchzuführenden Datenkommunikation aktuell ein Datentelegramm zu empfangen und weiterzuleiten ist. Nur für den Fall, dass dies nicht zutrifft, startet die Slaveeinheit ihre eigene Datenkommunikation und sendet spontan ein Datentelegramm hin zu der Mastereinheit. Ein Mikrokontroller einer solchen Slaveeinheit kann dabei zwar eigentlich für einen Vollduplex-Betrieb ausgelegt sein, aber aufgrund des durchzuführenden Kollisionshandlings zumindest zeitweise nur in einem Halbduplex-Betrieb arbeiten.

Gemäss einer Ausführungsform können bei dem hierin vorgestellten Datennetzwerk die Datenkommunikationspfade mittels einer gedrillten Doppelleitung realisiert sein. Bei dem darüber durchzuführenden Datenkommunikationsverfahren können dann die Datentelegramme über Datenkommunikationspfade in Form der gedrillten Doppelleitung ausgetauscht werden.

Anders ausgedrückt können die Datenkommunikationspfade zwischen benachbarten Slaveeinheiten sowie zwischen der ersten Slaveeinheit und der Mastereinheit mithilfe festverdrahteter Leitungen ausgeführt sein. Für die hierin beschriebenen Anwendungen kann es dabei genügen, lediglich zwei Leitungen, oder anders ausgedrückt eine Doppelleitung, zwischen benachbarten Teilnehmern des Datennetzwerks vorzusehen. Die beiden Leitungen können dabei als gedrillte Doppelleitung, manchmal auch als Doppelader oder "twisted pair" bezeichnet, ausgebildet sein, um hierdurch insbesondere Störspannungen, die durch induktive Einkopplungen hervorgerufen werden können, zu minimieren.

Indem zwischen benachbarten Teilnehmern des Datennetzwerks gedrillte Doppelleitungen mit lediglich zwei Leitungen verlaufen, kann ein Verdrahtungsaufwand und/oder ein für die Datenkommunikationspfade notwendiger Materialaufwand begrenzt werden. Dies kann insbesondere bei einer Anwendung wie beispielsweise in einer langen Aufzuganlage vorteilhaft sein, bei der Datentelegramme zum Teil über Dutzende von Slaveeinheiten über weite Distanzen übermittelt werden müssen.

Bei einer Ausführungsform einer Aufzuganlage gemäss dem dritten Aspekt der Erfindung kann die Aufzuganlage eine Steuerung aufweisen und mehrere Stockwerke in einem Gebäude gesteuert durch die Steuerung bedienen. Das Datennetzwerk kann sich dabei entlang der mehreren Stockwerke erstrecken. An jedem der Stockwerke kann eine Sicherheitseinrichtung angeordnet sein, welche dazu konfiguriert ist, Dateninhalte zu ermitteln und die Dateninhalte an eine zugeordnete Slaveeinheit des Datennetzwerks zu übermitteln. Die Aufzugsteuerung kann hierbei dazu konfiguriert sein, Dateninhalte von der Mastereinheit des Datennetzwerks zu erhalten und darauf basierend eine Funktion der Aufzuganlage zu steuern.

Anders ausgedrückt kann bei der konkreten Anwendung des hierin vorgeschlagenen Datennetzwerks in einer Aufzuganlage die Mastereinheit mit der Aufzugsteuerung kommunizieren. Jede der Slaveeinheiten kann mit einer der über die Aufzuganlage verteilt angeordneten Sicherheitseinrichtungen kommunizieren. Sicherheitseinrichtungen können in diesem Fall beispielsweise Türschalter sein, die ein korrektes Schliessen von Aufzugschachttüren und/oder Kabinentüren überwachen. Ergänzend oder alternativ können Sicherheitseinrichtungen auch andere Eigenschaften innerhalb der Aufzuganlage überwachen, die für deren sicheren und/oder zuverlässigen Betrieb überwacht werden sollten. Dateninhalte in Form von Informationen über die von einer Sicherheitseinrichtung überwachte Eigenschaft können dann von der Slaveeinheit über das Datennetzwerk an die Mastereinheit kommuniziert werden. Hierzu kann die Slaveeinheit ein entsprechendes Datagramm in ein Datentelegramm einfügen. Die Mastereinheit kann dann bei Empfang des Datentelegramms dessen Dateninhalt an die Aufzugsteuerung weitergeben. Die Aufzugsteuerung kann daraufhin Funktionen der Aufzuganlage wie beispielsweise einen Betrieb einer die Aufzugkabine verlagernden Antriebsmaschine steuern. Dabei kann sich vorteilhaft auswirken, dass die hierin beschriebene Datenkommunikation mit dem Datennetzwerk besonders schnell, zuverlässig, flexibel einsetzbar und/oder einfach konfigurierbar umgesetzt werden kann.

Es wird darauf hingewiesen, dass einige der möglichen Merkmale und Vorteile der Erfindung hierin mit Bezug auf unterschiedliche Ausführungsformen des Kommunikationsverfahrens einerseits und des hierfür einsetzbaren Datennetzwerks bzw. einer mit einem solchen Datennetzwerk ausgestatteten Aufzuganlage andererseits beschrieben sind. Ein Fachmann erkennt, dass die Merkmale in geeigneter Weise übertragen, kombiniert, angepasst oder ausgetauscht werden können, um zu weiteren Ausführungsformen der Erfindung zu gelangen.

Nachfolgend werden Ausführungsformen der Erfindung unter Bezugnahme auf die beigefügten Zeichnungen beschrieben, wobei weder die Zeichnungen noch die Beschreibung als die Erfindung einschränkend auszulegen sind.
Fig. 1 zeigt ein Datennetzwerk gemäss einer Ausführungsform der vorliegenden Erfindung.
Fig. 2 zeigt eine Prozessoreinheit einer Slaveeinheit des Datennetzwerks aus Fig. 1.
Fig. 3 zeigt eine Aufzuganlage gemäss einer Ausführungsform der vorliegenden Erfindung.
Fig. 4 veranschaulicht ein Datenkommunikationsverfahren gemäss einer Ausführungsform der vorliegenden Erfindung.
Fig. 5 zeigt eine beispielhafte Datenstruktur eines Datentelegramms für ein Datenkommunikationsverfahren gemäss einer Ausführungsform der vorliegenden Erfindung.

Die Figuren sind lediglich schematisch und nicht massstabsgetreu. Gleiche Bezugszeichen bezeichnen in den verschiedenen Figuren gleiche oder gleichwirkende Merkmale

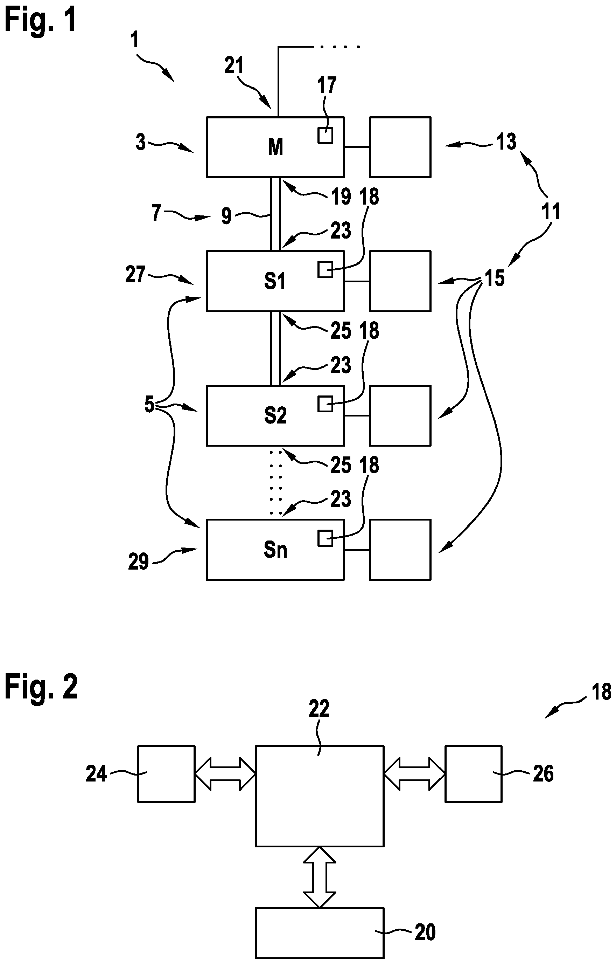

Fig. 1 zeigt ein Datennetzwerk 1, mithilfe dessen Dateninhalte zwischen verschiedenen Teilnehmern des Datennetzwerks 1 kommuniziert werden können. Das Datennetzwerk 1 umfasst eine Mastereinheit 3 sowie mehrere Slaveeinheiten 5. Die Mastereinheit ist mit "M" bezeichnet und die Slaveeinheiten sind mit "S1", "S2", ..., "Sn" bezeichnet. Die Mastereinheit 3 und die Slaveeinheiten 5 sind über Datenkommunikationspfade 7 in Form von gedrillten Doppelleitungen 9 miteinander verbunden.

Im dargestellten Beispiel sind sowohl die Mastereinheit 3 wie auch jede der Slaveeinheiten 5 jeweils mit einer Sicherheitseinrichtung 11 in Form einer Schaltung zur sicheren Erzeugung und/oder Verarbeitung von Dateninhalten verbunden. Die Mastereinheit 3 ist in diesem Fall mit einer Sicherheitssteuerung 13 verbunden, wohingegen jede der Slaveeinheiten 5 jeweils mit einer sicheren Eingabe-AusgabeEinheit (Safe IO) 15 verbunden ist. Die Sicherheitseinrichtungen 11 sind dabei derart ausgestaltet, dass sie erhöhten Sicherheitsanforderungen wie beispielsweise einem Sicherheit-Integrität-Level SIL3 genügen.

Im dargestellten Beispiel sind die Mastereinheit 3 (M) und die Slaveeinheiten 5 (S1 - Sn) über die Datenkommunikationspfade 9 seriell miteinander zu einer Kette verbunden. Die Mastereinheit 3 verfügt dabei über eine Master-Prozessoreinheit 17 und einen Datenanschluss 19. Optional kann die Mastereinheit 3 ferner über einen weiteren Anschluss in Form eines externen Anschlusses 21 verfügen, über den die Mastereinheit 3 mit anderen elektronischen Geräten beispielsweise über ein externes Netzwerk wie zum Beispiel ein normales Ethernet kommunizieren kann. Jede der Slaveeinheiten 5 verfügt über eine Prozessoreinheit 18, einen ersten Datenanschluss 23 und einen zweiten Datenanschluss 25. Mit Ausnahme einer ersten Slaveeinheit 27 (S1) und einer letzten Slaveeinheit 29 (Sn) sind dabei der erste Datenanschluss 23 einer Slaveeinheit 5 und der zweite Datenanschluss 25 einer zu dieser benachbarten Slaveeinheit 5 über einen der Datenkommunikationspfade 7 miteinander verbunden. Der erste Datenanschluss 23 der ersten Slaveeinheit 27 ist mit dem Datenanschluss 19 der Mastereinheit 3 verbunden. Der optional vorhandene zweite Datenanschluss 25 der letzten Slaveeinheit 29 bleibt ungenutzt.

Gemäss Fig. 2 verfügt eine Prozessoreinheit 18 einer Slaveeinheit 5 über einen Mikrokontroller 20, der mit einer komplexen programmierbaren Logikeinrichtung / CPLD 22 in Kommunikationsverbindung steht. Die CPLD 22 ist zwischen zwei physikalischen Anbindungen / PHYs 24, 26 angeordnet und kommuniziert mit den beiden PHYs 24, 26. Die beiden PHYs können beispielsweise von einem TJA1102 von NXP gebildet werden. Die CPLD 22 ist so konfiguriert, dass sie die Weiterleitung von Daten im wesentlichen verzögerungsfrei, das heisst noch während des Empfangs von Daten des gleichen Datentelegramm, durchführt. Der erste PHY 24 ist dazu mit dem ersten Datenanschluss 23 und der zweite PHY 26 mit dem zweite Datenanschluss 25 der Slaveeinheit 5 verbunden.

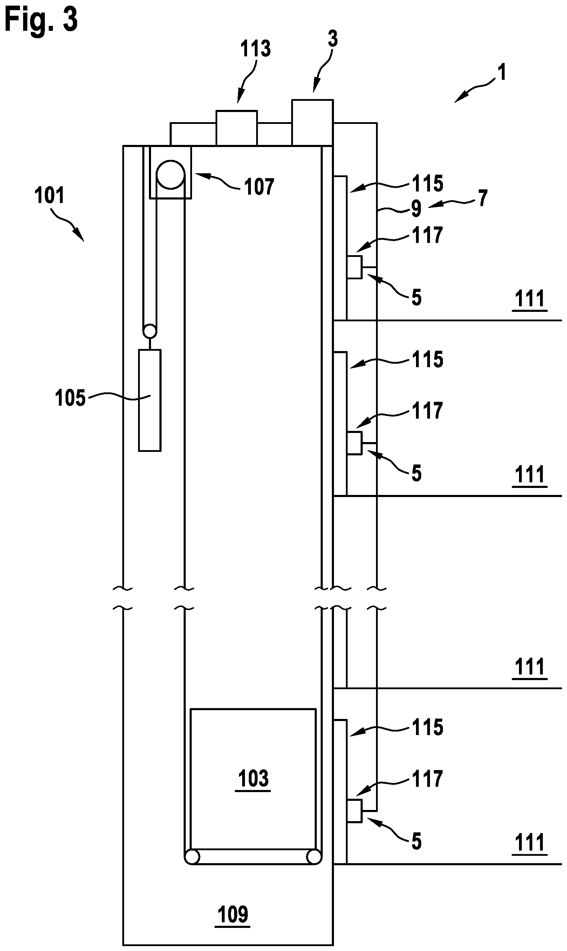

Fig. 3 zeigt eine Aufzuganlage 101, in der ein Datennetzwerk 1 implementiert ist. In der Aufzuganlage 101 können eine Aufzugkabine 103 und ein Gegengewicht 105 mithilfe einer Antriebsmaschine 107 vertikal innerhalb eines Aufzugschachts 109 verlagert werden und dabei hin zu verschiedenen Stockwerken 111 gefahren werden. Der Betrieb der Antriebsmaschine 107 wird durch eine Aufzugsteuerung 113 gesteuert. An jedem der Stockwerke 111 ist eine Schachttür 115 vorgesehen, mithilfe derer ein Zugang zu dem Aufzugschacht 109 bzw. der dahinter befindlichen Aufzugkabine 103 blockiert bzw. freigegeben werden kann. Ein aktueller Schliesszustand jeder dieser Schachttüren 115 wird jeweils mittels eines an der jeweiligen Schachttür 115 vorgesehenen Türschalters 117 überwacht. Der Türschalter 117 bildet dabei eine Sicherheitseinrichtung 11, 15, welche je nachdem, ob die Schachttür 115 geöffnet oder geschlossen ist, ein entsprechendes Signal bzw. Daten ermittelt und ausgibt.

Um die Information über die Schliesszustände der mehreren Schachttüren 115 ähnlich wie bei einer herkömmlichen Sicherheitskette an die Aufzugsteuerung 113 übermitteln zu können, wird mithilfe des hierin vorgestellten Datennetzwerks 1 eine Datenkommunikation zwischen den Türschaltern 117 und der Aufzugsteuerung 113 etabliert. Jeder der Türschalter 117 kann dabei als Sicherheitseinrichtung 11 seine Signale bzw. Daten an eine zugeordnete Slaveeinheit 5 des Datennetzwerks 1 übermitteln. Über das Datennetzwerk 1 können dann die Daten an die Mastereinheit 3 kommuniziert werden und von dieser an die Aufzugsteuerung 113 übergeben werden.

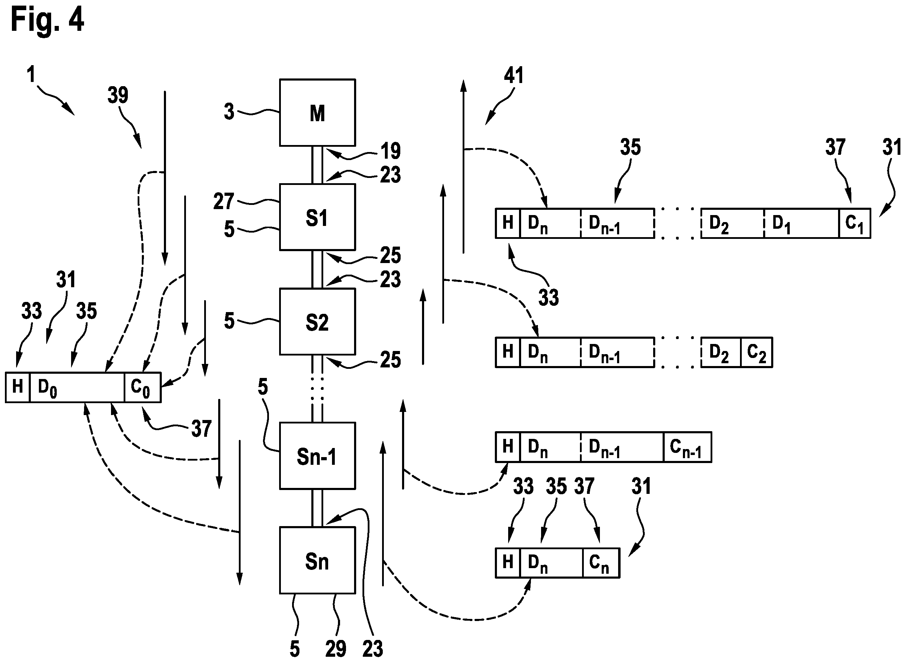

Nachfolgend werden mögliche Details zu der über das Datennetzwerk 1 zu etablierenden Datenkommunikation auch unter Bezugnahme auf Fig. 4 erläutert.

Im Rahmen der Datenkommunikation werden Dateninhalte in Datentelegrammen 31 eingespeichert bzw. aus diesen ausgelesen. Die Datentelegramme 31 sind aus einer Vielzahl aufeinanderfolgender Bits zusammengesetzt. Jedes Datentelegramm 31 verfügt dabei über einen Header 33 (H), einen Datagrammbereich 35 und eine Prüfsumme 37 (Cₓ). Ein Datagrammbereich 35 umfasst dabei ein oder mehrere Datagramme D₁, D₂, ..., Dₙ₋₁, Dₙ.

Um eine Datenkommunikation über das Datennetzwerk 1 etablieren zu können, ist die Mastereinheit 3 dazu konfiguriert, ein Datentelegramm 31 mit einem Header H, einem Datagrammbereich 35 mit einem Datagramm Do und einer Prüfsumme Co über ihren Datenanschluss 19 an die benachbarte erste Slaveeinheit 27 zu übertragen. Das Datagramm Do kann beispielsweise Anweisungen an eine, mehrere oder alle Slaveeinheiten 5 beinhalten. Die Mastereinheit 3 schickt somit das Datentelegramm 31 über das kettenartige Datennetzwerk 1 in Richtung eines Datenhinwegs 39 hin zu der letzten Slaveeinheit 29.

Jede der Slaveeinheiten 5 mit Ausnahme der letzten Slaveeinheit 29 ist dabei dazu konfiguriert, ein aus der Richtung von der Mastereinheit 3 kommendes und an ihrem ersten Datenanschluss 23 empfangenes Datentelegramm 31 über ihren zweiten Datenanschluss 25 in einer Richtung hin zu der letzten Slaveeinheit 29 weiterzuleiten. Dabei gibt die jeweilige Slaveeinheit 5 das Datentelegramm 31 von einer vorangehend benachbarten Slaveeinheit 5 kommend an eine nachfolgend benachbarte Slaveeinheit 5 weiter. Auf dem Datenhinweg 39 erfolgt diese Weitergabe im Wesentlichen verzögerungsfrei, d.h., die Slaveeinheit 5 leitet empfangene Teile eines Datentelegramms 31 mit möglichst wenig zeitlicher Verzögerung, das heisst am besten Bit für Bit, noch während sie andere Teile des gleichen Datentelegramms 1 empfängt an die nachfolgend benachbarte Slaveeinheit 5 weiter. Dabei wird der Inhalt des Datentelegramms 31 während des Datenhinwegs 39 von keiner der Slaveeinheiten 5 modifiziert. Dementsprechend braucht während des Datenhinwegs 39 in dem Datentelegramm 31 auch die Prüfsumme 37 nicht verändert werden.

Eine am Ende der Kette befindliche Slaveeinheit 5 erkennt ihre Funktion als letzte Slaveeinheit 29 dadurch, dass sie lediglich mit einer einzigen benachbarten Slaveeinheit 5 verbunden ist. Dementsprechend ist ihr optional vorhandener zweiter Datenanschluss 25 nicht belegt.

Sobald das ursprünglich von der Mastereinheit 3 ausgesandte Datentelegramm 31 die letzte Slaveeinheit 29 (Sn) erreicht, leitet diese letzte Slaveeinheit 29 das empfangene Datentelegramm 31 über seinen ersten Datenanschluss 23 zurück in Richtung hin zu der Mastereinheit 3, also an die vorletzte Slaveeinheit 5 (Sn-1), sodass sich das Datentelegramm 31 dann entlang der Kette in dem Datenrückweg 41 bewegt. Die letzte Slaveeinheit 29 (Sn) wartet insbesondere nach dem vollständigen Empfang des Datentelegramms 31 eine kurze, einstellbare Zeitspanne ab, beispielsweise im Bereich zwischen 0,2 und 0,8 Millisekunden, bevor sie das Datentelegramm 31 wieder zurückleitet. Während des Datenrückwegs 41 geben die Slaveeinheiten 5 (inklusive der letzten Slaveeinheit 29 (Sn)) jedoch das Datentelegramm 31 nicht einfach unverändert an die nachfolgend benachbarte Slaveeinheit 5 weiter. Stattdessen hängt jede der Slaveeinheiten 5 bei Bedarf einen Dateninhalt in Form eines Datagramms D₁, D₂, ..., Dₙ₋₁, Dₙ ergänzend hinter ein letztes bereits zuvor eingespeichertes Datagramm in dem Datagrammbereich 35 des Datentelegramms 31 an. Das vom Master 3 versandte Datagramm Do wird dabei insbesondere überschrieben. Er könnte auch wieder an den Master 3 zurückgeschickt werden.

Da das Datentelegramm 31 dabei bei jedem Weiterleiten von einer Slaveeinheit 5 zur nächsten Slaveeinheit 5 modifiziert wird, prüfen alle Slaveeinheiten 5 ferner bei Empfang des Datentelegramms 31 dessen Prüfsumme 37, um die Integrität der übertragenen Daten beurteilen zu können. Ferner berechnet jede Slaveeinheit 5, nachdem sie ihre Dateninhalte in Form eines ergänzenden Datagramms in den Datagrammbereich 35 des Datentelegramms 31 eingespeichert hat, eine neue Prüfsumme 37 auf Basis der Bits im Rest des ergänzten Datentelegramms 31 und hängt diese neue Prüfsumme 37 am Ende des Datentelegramms 31 an. Die vorherige Prüfsumme 37 wird damit aktualisiert bzw. ersetzt.

Auf dem Datenhinweg 39 lesen die Prozessoreinheiten 18 der Slaveeinheit 5 das Datentelegramm 31 ein und werten es aus. Wenn das Datentelegramm 31 eine Aufforderung an die jeweilige Slaveeinheit 5 enthält, auf dem Datenrückweg 41 Informationen an die Mastereinheit 3 zu übermitteln, dann beginnt die jeweilige Prozessoreinheit 18 unmittelbar nach dem Empfangen und Auswerten der entsprechenden Anweisung, die angeforderten Informationen zusammenzustellen und möglichst im CPLD 22 bereitzustellen.

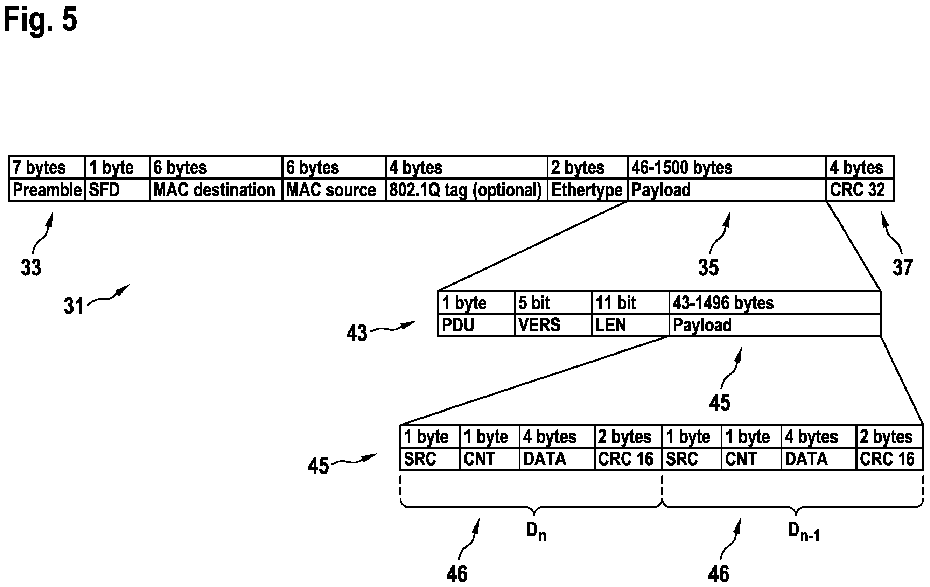

Fig. 5 veranschaulicht beispielhaft ein Datentelegramm 31. Dabei sind mögliche bzw. optionale Ausgestaltungen, Bitlängen und Inhalte der in dem Datentelegramm 31 aufgenommenen Daten in dem Header 33, dem Datagrammbereich 35 und der Prüfsumme 37 angegeben.

Das Datentelegramm 31 ist grundsätzlich entsprechend dem Ethernet-Datenblockformat Ethernet-II nach IEEE 802.3 aufgebaut. Der Header 33 beginnt mit einer 7 Byte langen Präambel (Preamble), an die sich ein so genannter Start Frame Delimiter (SFD) mit einer Länge von einem Byte anschliesst. Darauf folgen die Ziel- und die Quell-Mac-Adressen (MAC destination, MAC source) mit einer Länge von jeweils 6 Byte. Die Ziel-Mac-Adresse identifiziert die Netzwerkstation, die das Datentelegramm 31 empfangen soll und die Quell-Mac-Adresse, die Netzwerkstation, welche das Datentelegramm 31 gesendet hat. Dann folgt optional ein so genanntes VLAN-Tag (802.1Q tag) mit 4 Byte Länge. Daran schliesst sich eine Typangabe (Ethertype) mit einer Länge von 2 Bytes an, welche den Header 33 abschliesst. Anhand der Typangabe können verschiedene Arten von Datentelegrammen 31 unterschieden werden. Die Typangabe legt auch fest, ob das Datentelegramm 31 gemäss dem herkömmlichen Ethernet-Standard oder mit dem hier beschriebenen Verfahren für sicherheitsrelevante Daten übertragen werden. An den Header 33 schliesst sich der Datagrammbereich 35 (Payload) des Datentelegramms 31 an, welcher eine Länge zwischen 46 und 1500 Bytes aufweisen kann. Das Datentelegramm 31 wird von der Prüfsumme (CRC32) mit einer Länge von 4 Byte abgeschlossen.

Im dargestellten Beispiel ist der Datagrammbereich 35 als ein Sicherheits-Rahmen (Safety Frame) 43 ausgestaltet. Dies wird durch eine spezielle, im herkömmlichen Ethernet-Standard nicht verwendete Typangabe, beispielsweise 0xEEB0 festgelegt und gekennzeichnet. Der Sicherheits-Rahmen 43 beginnt mit einem Daten-Kenner (PDU) mit einer Länge von einem Byte. Der Daten-Kenner spezifiziert die Art der innerhalb des Sicherheits-Rahmens übertragenen Daten. Er hat damit für den Sicherheits-Rahmen 43 eine vergleichbare Funktion wie die Typangabe (Ethertype) für das gesamte Datentelegramm 31. An den Daten-Kenner schliesst sich eine Versionsinformation (VERS) mit einer Länge von 5 Bit an. Die Versionsinformation gibt an, gemäss welcher Version der Sicherheits-Rahmen 43 aufgebaut ist. An die Versionsinformation schliesst sich eine Längeninformation (LEN) mit 11 Bit an. Die Längeninformation gibt die Länge der sich anschliessenden Nutzdaten 45 (Payload) des Sicherheits-Rahmens 43 an. Diese Nutzdaten 45 können zwischen 43 und 1496 Bytes umfassen.

Die Nutzdaten 45 des Sicherheits-Rahmens 43 setzen sich aus hintereinander angeordneten, identisch aufgebauten Datagrammen 46 (in Fig. 4 D₁-Dₙ) mit einer Länge von jeweils 8 Byte zusammen. Aus der maximalen Länge der Nutzdaten 45 von 1496 Bytes ergibt sich damit eine maximale Anzahl von 187 Datagrammen 46. Jedes Datagramm 46 beginnt mit einer ein Byte langen Quellinformation (SRC), welche die das Datagramm 46 sendende Slave-Einheit 5 kennzeichnet. Daran schliesst sich ein ein Byte langer Zähler (CNT) an, der bei jedem Senden eines Datagramms 46 von der Slave-Einheit 5 inkrementiert wird. Damit kann überprüft werden, ob die Slave-Einheit 5 noch fehlerfrei funktioniert. Es folgen dann 4 Byte mit Daten (DATA), die die Slave-Einheit 5 in dem Datagramm 46 übermittelt. Abschlossen wird das Datagramm 46 von einer 2 Byte langen Prüfsumme (CRC 16, Cyclic Redundancy Check mit 16 Bit), die analog zur Prüfsumme 37 des Datentelegramms 31 berechnet wird und zur Prüfung der Integrität des Datagramms 46 dient.

Im dargestellten Beispiel umfassen die Nutzdaten 45 des Sicherheits-Rahmens 43 zwei hintereinander angeordnete Datagramme 46. Üblicherweise hängt jede Slave-Einheit 5 beim Datenrückweg 41 eine Datagramm 46 an die Nutzdaten 45 des Sicherheits-Rahmens 43 an. Es ist damit der Aufbau der Nutzdaten 45 nach dem Anhängen des Datagramms 46 der vorletzten Slave-Einheit Sn-1 dargestellt. Das Datagramm 46 der vorletzten Slave-Einheit Sn-1 (in Fig. 4 Datagramm Dₙ₋₁) schliesst sich dabei an das Datagramm 46 der letzten Slave-Einheit Sn (in Fig. 4 Datagramm Dₙ) an.

Es wäre ebenfalls möglich, dass eine Slave-Einheit 5 mehr als ein Datagramm 46 an die Nutzdaten 45 des Sicherheits-Rahmens 43 anhängt. Dies könnte dann der Fall sein, wenn die entsprechende Slave-Einheit 5 mehr als 4 Byte an Daten übermitteln möchte.

Die Datenkommunikation bzw. die in dem Datennetzwerk 1 verwendeten Hardwarekomponenten in Form von beispielsweise PHYs und CPLDs sind prinzipiell für eine Vollduplexkommunikation ausgelegt. Eine Abwärtskommunikation von der Mastereinheit 3 kommend in dem Datenhinweg 39 hin zu einer oder mehreren Slaveeinheiten 5 kann dabei vorzugweise ausschliesslich von der Mastereinheit 3 veranlasst werden. Während dieses Datenhinwegs 39 reichen die Slaveeinheiten 5 das Datentelegramm 31 jeweils schnellstmöglich on-the-fly und unverändert weiter, können dessen Inhalt jedoch "mithören". Während des nachfolgenden Datenrückwegs 41 leiten die Slaveeinheiten 5 zwar das Datentelegramm 31 auch mit möglichst wenig Zeitverzögerung on-the-fly weiter, speichern dabei aber gegebenenfalls ergänzend wie beschrieben ihre eigenen Dateninhalte als Datagramme in das Datentelegramm 31 ein und aktualisieren daraufhin auch die Prüfsumme 37.

Die Datenkommunikation in Richtung des Datenrückwegs 41 kann somit durch die Mastereinheit 3 veranlasst werden, indem diese ein Datentelegramm 31 anfänglich entlang des Datenhinwegs 39 aussendet und das Datentelegramm 31 dann von der letzten Slaveeinheit 29 auf den Datenrückweg 41 zurückgeleitet wird.

Alternativ können auch die Slaveeinheiten 5 selbst spontan eine Datenkommunikation in Richtung des Datenrückwegs 41 initiieren. Hierzu kann eine Slaveeinheit 5 von sich aus aktiv ein Datentelegramm 31 an seinem ersten Datenanschluss 23 ausgeben und somit zu der benachbarten Slaveeinheit 5 auf dem Datenrückweg 41 hin zu der Mastereinheit 3 schicken. Allerdings sollte die Slaveeinheit 5 vor dem aktiven Starten einer solchen Datenkommunikation ein Kollisionshandling durchführen und ausschliesslich dann von sich aus ein Datentelegramm senden, wenn von der Slaveeinheit 5 aktuell kein anderes Datentelegramm 31 empfangen und weitergeleitet zu werden braucht.

Mit dem hierin beschriebenen Ansatz einer Datenkommunikation und eines hierfür einsetzbaren Datennetzwerks 1 mit den beschriebenen akzeptablen Einschränkungen und einem spezialisierten Protokoll können physikalische Anbindungen, das heisst PHYs, die ursprünglich für den Ethernet-Standard IEEE802.3bw 100BASE-T1 für die Automotive-Industrie entwickelt wurden und bisher kostengünstig, schnell und robust für eine

Datenkommunikation über kurze Distanzen in Autos verwendet werden, auch für andere Anwendungen genutzt werden.

Insbesondere können durch die beschriebenen Modifikationen Anwendungen in Bereichen wie zum Beispiel Aufzuganlagen ermöglicht werden, bei denen Daten über verhältnismässig weite Wege kommuniziert werden müssen. Dabei ist die physikalische Lage des 100BASE-T1 in der Lage, verschiedene Anwendungen über ein Standard-IP-Protokoll für nicht-sicherheitskritische Datentelegramme mit dem in diesem Dokument spezifizierten sicherheitskritischen Protokoll für sicherheitskritische Datentelegramme zu kombinieren. Die sicherheitskritischen und nicht-sicherheitskritischen Datentelegramme werden dazu auf Grund ihrer Typangabe (Ethertype) im Header unterschieden. Das Signal bzw. das Datentelegramm wird durch die zu einer Vollduplexkommunikation fähige 100BASE-T1-Leitung von Knoten zu Knoten in einer Richtung eines Datenhinwegs und eines Datenrückwegs gleichzeitig durchgeleitet.

## Patentansprüche

1. Verfahren zum Kommunizieren von Dateninhalten innerhalb eines Datennetzwerkes (1), insbesondere in einer Aufzuganlage,
wobei das Datennetzwerk (1) eine Mastereinheit (3) und mehrere Slaveeinheiten (5) aufweist und die Mastereinheit (3) und die Slaveeinheiten (5) über Datenkommunikationspfade (7) miteinander verbunden sind, um Datentelegramme (31) aus einer Vielzahl von Bits zwischen einander auszutauschen,
wobei jedes Datentelegramm (31) einen Header (33), einen Datagrammbereich (35) und eine Prüfsumme (37) umfasst, wobei der Datagrammbereich (35) zum seriellen Speichern mehrerer Datagramme (D₁, ..., Dₙ) konfiguriert ist, jedes Datagramm (D₁, ..., Dₙ) einen zu kommunizierenden Dateninhalt umfasst und die Prüfsumme (37) auf Basis der Bits im Rest des Datentelegramms (31) eindeutig zu berechnen ist,
wobei die Mastereinheit (3) und die Slaveeinheiten (5) über die Datenkommunikationspfade (7) seriell miteinander zu einer Kette verbunden sind, wobei die Mastereinheit (3) auf einem Datenhinweg (39) hin zu einer letzten Slaveeinheit (29) ein Datentelegramm (31) an eine erste Slaveeinheit (27) überträgt,
wobei jede der Slaveeinheiten (5) mit Ausnahme der letzten Slaveeinheit (29) ein aus einer Richtung von der Mastereinheit (3) an einem ersten Datenanschluss (23) empfangenes Datentelegramm (31) über einen zweiten Datenanschluss (25) in die Richtung hin zu der letzten Slaveeinheit (29) weiterleitet und ein aus einer Richtung von der letzten Slaveeinheit (29) an dem zweiten Datenanschluss (25) empfangenes Datentelegramm (31) über den ersten Datenanschluss (23) in die Richtung hin zu der Mastereinheit (3) weiterleitet,
wobei die letzte Slaveeinheit (29) einen Datenrückweg (41) einleitet, indem sie ein aus der Richtung von der Mastereinheit (3) an einem ersten Datenanschluss (23) empfangenes Datagramm (D₁, ..., Dₙ) über den ersten Datenanschluss (23) hin in eine Richtung zu der Mastereinheit (3) zurückleitet, und
wobei das Datentelegramm (31) von den Slaveeinheiten (5) ausschliesslich während des Datenrückwegs (41) modifiziert wird,
**dadurch gekennzeichnet, dass**
die Slaveeinheiten (5) eine Prozessoreinheit (18) zum Weiterleiten und Modifizieren des Datentelegramms (31) aufweisen und zumindest eine Prozessoreinheit (18) dazu konfiguriert ist, auf dem Datenhinweg (39) das Datentelegramm (31) einzulesen und auszuwerten und wenn das Datentelegramm (31) eine Aufforderung an die jeweilige Slaveeinheit (5) enthält, auf dem Datenrückweg (41) Informationen an die Mastereinheit (3) zu übermitteln, unmittelbar nach dem Empfangen und Auswerten der entsprechenden Anweisung zu beginnen, die angeforderten Informationen zusammenzustellen.

2. Verfahren nach Anspruch 1,
wobei die letzte Slaveeinheit (29) vor Einleiten des Datenrückwegs (41) eine einstellbare Zeitspanne abwartet.

3. Verfahren nach Anspruch 1 oder 2,
wobei das Verfahren umfasst:
- Empfangen eines Datentelegramms (31) durch eine Slaveeinheit (5) von der Mastereinheit (3) oder von einer benachbarten Slaveeinheit (5) und Weiterleiten von Teilen des Datentelegramms (31) noch während des Empfangens an eine andere benachbarte Slaveeinheit (5) bzw. an die Mastereinheit (3).

4. Verfahren nach Anspruch 3,
wobei das Verfahren weiter umfasst:
- Prüfen der Prüfsumme (37) des Datentelegramms (31),
- Anhängen eines ergänzenden Datagramms (D₁, ..., Dₙ) hinter ein letztes bereits eingespeichertes Datagramm (D₁, ..., Dₙ) in dem Datagrammbereich (35), wobei das ergänzende Datagramm (D₁, ..., Dₙ) einen von der Slaveeinheit (5) zu kommunizierenden Dateninhalt umfasst, und
- Berechnen einer neuen Prüfsumme (37) auf Basis der Bits im Rest des um das ergänzende Datagramm (D₁, ..., Dₙ) erweiterten Datentelegramms (31) und Anhängen der neu berechneten Prüfsumme (37) am Ende des Datentelegramms (31).

5. Verfahren nach einem der vorangehenden Ansprüche,
wobei jede der Slaveeinheiten (5) dazu konfiguriert ist, von sich aus aktiv eine Datenkommunikation mit der Mastereinheit (3) zu starten und hierzu ein Datentelegramm (31) hin zu der Mastereinheit (3) zu senden,
wobei jede der Slaveeinheiten (5) vor dem aktiven Starten einer Datenkommunikation ein Kollisionshandling durchführt und ausschliesslich dann von sich aus ein Datentelegramm (31) sendet, wenn von der Slaveeinheit (5) aktuell kein Datentelegramm (31) empfangen und weitergeleitet wird.

6. Verfahren nach einem der vorangehenden Ansprüche, wobei die Datentelegramme (31) über Datenkommunikationspfade (7) in Form einer gedrillten Doppelleitung (9) ausgetauscht werden.

7. Datennetzwerk zum Kommunizieren von Dateninhalten innerhalb eines Datennetzwerkes (1), insbesondere in einer Aufzuganlage,
wobei das Datennetzwerk (1) eine Mastereinheit (3) und mehrere Slaveeinheiten (5) aufweist und die Mastereinheit (3) und die Slaveeinheiten (5) über Datenkommunikationspfade (7) miteinander verbunden sind, um Datentelegramme (31) aus einer Vielzahl von Bits zwischen einander auszutauschen,
wobei jedes Datentelegramm (31) einen Header (33), einen Datagrammbereich (35) und eine Prüfsumme (37) umfasst, wobei der Datagrammbereich (35) zum seriellen Speichern mehrerer Datagramme (D₁, ..., Dₙ) konfiguriert ist, jedes Datagramm (D₁, ..., Dₙ) einen zu kommunizierenden Dateninhalt umfasst und die Prüfsumme (37) auf Basis der Bits im Rest des Datentelegramms (31) eindeutig zu berechnen ist,
wobei die Mastereinheit (3) und die Slaveeinheiten (5) über die Datenkommunikationspfade (7) seriell miteinander zu einer Kette verbunden sind, wobei die Mastereinheit (3) eine Master-Prozessoreinheit (17) und zumindest einen Datenanschluss (19) aufweist und wobei jede der Slaveeinheiten (5) eine Prozessoreinheit (18) und einen ersten und einen zweiten Datenanschluss (23, 25) aufweist,
wobei die Mastereinheit (3) dazu konfiguriert ist, auf einem Datenhinweg (39) hin zu einer letzten Slaveeinheit (29) ein Datentelegramm (31) über ihren Datenanschluss (19) an eine erste Slaveeinheit (27) zu übertragen,
wobei jede der Slaveeinheiten (5) mit Ausnahme der letzten Slaveeinheit (29) dazu konfiguriert ist, ein aus einer Richtung von der Mastereinheit (3) an ihrem ersten Datenanschluss (23) empfangenes Datentelegramm (31) über ihren zweiten Datenanschluss (25) in die Richtung hin zu der letzten Slaveeinheit (29) weiterzuleiten und ein aus einer Richtung von der letzten Slaveeinheit (29) an dem zweiten Datenanschluss (25) empfangenes Datentelegramm (31) über den ersten Datenanschluss (23) in die Richtung hin zu der Mastereinheit (3) weiterzuleiten,
wobei die letzte Slaveeinheit (29) dazu konfiguriert ist, einen Datenrückweg (41) einzuleiten, indem sie ein aus der Richtung von der Mastereinheit (3) an ihrem ersten Datenanschluss (23) empfangenes Datentelegramm (31) über den ersten Datenanschluss (23) hin in eine Richtung zu der Mastereinheit (3) zurückleitet, und
wobei jede der Slaveeinheiten (3) dazu konfiguriert ist, das Datentelegramm (31) ausschliesslich während des Datenrückwegs (41) zu modifizieren,
**dadurch gekennzeichnet, dass**
zumindest eine Prozessoreinheit (18) der Slaveeinheiten (5) dazu konfiguriert ist, auf dem Datenhinweg (39) das Datentelegramm (31) einzulesen und auszuwerten und wenn das Datentelegramm (31) eine Aufforderung an die jeweilige Slaveeinheit (5) enthält, auf dem Datenrückweg (41) Informationen an die Mastereinheit (3) zu übermitteln, unmittelbar nach dem Empfangen und Auswerten der entsprechenden Anweisung zu beginnen, die angeforderten Informationen zusammenzustellen.

8. Datennetzwerk nach Anspruch 7,
wobei die letzte Slaveeinheit (29) dazu konfiguriert ist, vor dem Einleiten des Datenrückwegs (41) eine einstellbare Zeitspanne abzuwarten.

9. Datennetzwerk nach Anspruch 7 oder 8 wobei jede der Slaveeinheiten (5) dazu konfiguriert ist,
- ein Datentelegramm (31) von der Mastereinheit (3) oder von einer benachbarten Slaveeinheit (5) zu empfangen und Teile des Datentelegramms (31) noch während des Empfangens an eine andere benachbarte Slaveeinheit (5) bzw. an die Mastereinheit (3) weiterzuleiten.

10. Datennetzwerk nach Anspruch 9 wobei jede der Slaveeinheiten (5) dazu konfiguriert ist,
- eine Prüfsumme (37) des Datentelegramms (31) zu prüfen,
- ein ergänzendes Datagramm (D₁, ..., Dₙ) hinter ein letztes bereits eingespeichertes Datagramm (D₁, ..., Dₙ) in dem Datagrammbereich (35) anzuhängen, wobei das ergänzende Datagramm (D₁, ..., Dₙ) einen von der Slaveeinheit (5) zu kommunizierenden Dateninhalt umfasst, und
- eine neue Prüfsumme (37) auf Basis der Bits im Rest des um das ergänzende Datagramm (D₁, ..., Dₙ) erweiterten Datentelegramms (31) zu berechnen und die neu berechnete Prüfsumme (37) am Ende des Datentelegramms (31) anzuhängen.

11. Datennetzwerk nach einem der Ansprüche 7 bis 10,
wobei jede der Slaveeinheiten (5) dazu konfiguriert ist, von sich aus aktiv eine Datenkommunikation mit der Mastereinheit (3) zu starten und hierzu ein Datentelegramm (31) hin zu der Mastereinheit (3) zu senden,
wobei jede der Slaveeinheiten (5) dazu konfiguriert ist, vor dem aktiven Starten einer Datenkommunikation ein Kollisionshandling durchzuführen und ausschliesslich dann von sich aus ein Datentelegramm (31) zu senden, wenn von der Slaveeinheit (5) aktuell kein Datentelegramm (31) empfangen und weitergeleitet wird.

12. Datennetzwerk nach einem der Ansprüche 7 bis 11,
wobei die Datenkommunikationspfade (7) durch eine gedrillte Doppelleitung (9) implementiert sind.

13. Aufzuganlage (101) mit einem Datennetzwerk (1) gemäss einem der Ansprüche 7 bis 12.

14. Aufzuganlage (101) nach Anspruch 13,
wobei die Aufzuganlage (101) eine Steuerung (113) aufweist und mehrere Stockwerke (111) in einem Gebäude gesteuert durch die Steuerung (113) bedient,
wobei sich das Datennetzwerk (1) entlang der mehreren Stockwerke (111) erstreckt, wobei an jedem der Stockwerke (111) eine Sicherheitseinrichtung (11) angeordnet ist, welche dazu konfiguriert ist, Dateninhalte zu ermitteln und die Dateninhalte an eine zugeordnete Slaveeinheit (5) des Datennetzwerks (1) zu übermitteln, und
wobei die Aufzugsteuerung (113) dazu konfiguriert ist, Dateninhalte von der Mastereinheit (3) des Datennetzwerks (1) zu erhalten und darauf basierend eine Funktion der Aufzuganlage (101) zu steuern.

## Claims

1. Method for communicating data content within a data network (1), in particular in an elevator system,
the data network (1) comprising a master unit (3) and a plurality of slave units (5) and the master unit (3) and the slave units (5) being connected to one another via data communication paths (7) in order to exchange data telegrams (31) consisting of a large number of bits between one another,
each data telegram (31) comprising a header (33), a datagram region (35) and a checksum (37), the datagram region (35) being configured for the serial storage of a plurality of datagrams (D₁, ..., Dₙ), each datagram (D₁, ..., Dₙ) comprising a piece of data content to be communicated and the checksum (37) being calculated uniquely on the basis of the bits in the remainder of the data telegram (31),
the master unit (3) and the slave units (5) being connected to one another in series to form a chain via the data communication paths (7),
the master unit (3) transmitting a data telegram (31) to a first slave unit (27) on an outward data path (39) up to a last slave unit (29),
each of the slave units (5), with the exception of the last slave unit (29), forwarding a data telegram (31) received from a direction from the master unit (3) at a first data connection (23) in the direction toward the last slave unit (29) via a second data connection (25) and forwarding a data telegram (31) received from a direction from the last slave unit (29) at the second data connection (25) in the direction toward the master unit (3) via the first data connection (23),
the last slave unit (29) initiating a data return path (41) by returning a datagram (D₁, ..., Dₙ) received from the direction from the master unit (3) at a first data connection (23) in a direction toward the master unit (3) via the first data connection (23), and
the data telegram (31) being modified by the slave units (5) exclusively during the data return path (41),
**characterized in that**
the slave units (5) have a processor unit (18) for forwarding and modifying the data telegram (31) and at least one processor unit (18) is configured to read and evaluate the data telegram (31) on the outward data path (39) and, if the data telegram (31) contains a request to the particular slave unit (5) to transmit information to the master unit (3) on the data return path (41), to begin compiling the requested information immediately after receiving and evaluating the corresponding instruction.

2. Method according to claim 1,
wherein the last slave unit (29) waits for an adjustable period of time before initiating the data return path (41).

3. Method according to either claim 1 or claim 2,
wherein the method comprises:
- a slave unit (5) receiving a data telegram (31) from the master unit (3) or from an adjacent slave unit (5) and forwarding parts of the data telegram (31), while it is being received, to another adjacent slave unit (5) or to the master unit (3).

4. Method according to claim 3,
wherein the method further comprises:
- checking the checksum (37) of the data telegram (31),
- appending a supplementary datagram (D₁, ..., Dₙ) after a last already-stored datagram (D₁, ..., Dₙ) in the datagram region (35), wherein the supplementary datagram (D₁, ..., Dₙ) comprises a piece of data content to be communicated by the slave unit (5), and
- calculating a new checksum (37) on the basis of the bits in the rest of the data telegram (31) expanded by the supplementary datagram (D₁, ..., Dₙ) and appending the newly calculated checksum (37) to the end of the data telegram (31).

5. Method according to any of the preceding claims,
wherein each of the slave units (5) is configured to actively start data communication with the master unit (3) of its own accord and to send a data telegram (31) to the master unit (3) for this purpose,
wherein each of the slave units (5) performs collision handling before actively starting a data communication and then sends a data telegram (31) of its own accord only if the slave unit (5) is currently not receiving and forwarding a data telegram (31).

6. Method according to any of the preceding claims, wherein the data telegrams (31) are exchanged via data communication paths (7) in the form of a twisted double line (9).

7. Data network for communicating data content within a data network (1), in particular in an elevator system,
the data network (1) comprising a master unit (3) and a plurality of slave units (5) and the master unit (3) and the slave units (5) being connected to one another via data communication paths (7) in order to exchange data telegrams (31) consisting of a large number of bits between one another,
each data telegram (31) comprising a header (33), a datagram region (35) and a checksum (37), the datagram region (35) being configured for the serial storage of a plurality of datagrams (D₁, ..., Dₙ), each datagram (D₁, ..., Dₙ) comprising a piece of data content to be communicated and the checksum (37) being calculated uniquely on the basis of the bits in the remainder of the data telegram (31),
the master unit (3) and the slave units (5) being connected to one another in series to form a chain via the data communication paths (7),
the master unit (3) having a master processor unit (17) and at least one data connection (19) and each of the slave units (5) having a processor unit (18) and a first and a second data connection (23, 25),
the master unit (3) being configured to transmit a data telegram (31) via the data connection (19) thereof to a first slave unit (27) on an outward data path (39) up to a last slave unit (29),
each of the slave units (5), with the exception of the last slave unit (29), being configured to forward a data telegram (31) received from a direction from the master unit (3) at its first data connection (23) in the direction toward the last slave unit (29) via its second data connection (25) and forwarding a data telegram (31) received from a direction from the last slave unit (29) at the second data connection (25) in the direction toward the master unit (3) via its first data connection (23),
the last slave unit (29) being configured to initiate a data return path (41) by returning a data telegram (31) received from the direction from the master unit (3) at its first data connection (23) in a direction toward the master unit (3) via the first data connection (23), and
each of the slave units (3) being configured to modify the data telegram (31) exclusively during the data return path (41),
**characterized in that**
at least one processor unit (18) of the slave units (5) is configured to read and evaluate the data telegram (31) on the outward data path (39) and, if the data telegram (31) contains a request to the particular slave unit (5) to transmit information to the master unit (3) on the data return path (41), to begin compiling the requested information immediately after receiving and evaluating the corresponding instruction.

8. Data network according to claim 7,
wherein the last slave unit (29) is configured to wait for an adjustable period of time before initiating the data return path (41).

9. Data network according to either claim 7 or claim 8, wherein each of the slave units (5) is configured
- to receive a data telegram (31) from the master unit (3) or from an adjacent slave unit (5) and to forward parts of the data telegram (31), while it is being received, to another adjacent slave unit (5) or to the master unit (3).

10. Data network according to claim 9, wherein each of the slave units (5) is configured
- to check a checksum (37) of the data telegram (31),
- to append a supplementary datagram (D₁, ..., Dₙ) after a last already-stored datagram (D₁, ..., Dₙ) in the datagram region (35), wherein the supplementary datagram (D₁, ..., Dₙ) comprises a piece of data content to be communicated by the slave unit (5), and
- to calculate a new checksum (37) on the basis of the bits in the rest of the data telegram (31) expanded by the supplementary datagram (D₁, ..., Dₙ) and to append the newly calculated checksum (37) to the end of the data telegram (31).

11. Data network according to any of claims 7 to 10,
wherein each of the slave units (5) is configured to actively start data communication with the master unit (3) of its own accord and to send a data telegram (31) to the master unit (3) for this purpose,
wherein each of the slave units (5) is configured to perform collision handling before actively starting a data communication and to then send a data telegram (31) of its own accord only if the slave unit (5) is currently not receiving and forwarding a data telegram (31).

12. Data network according to any of claims 7 to 11,
wherein the data communication paths (7) are implemented by a twisted double line (9).

13. Elevator system (101) having a data network (1) according to any of claims 7 to 12.

14. Elevator system (101) according to claim 13,
wherein the elevator system (101) has a controller (113) and serves several floors (111) in a building under the control of the controller (113),
wherein the data network (1) extends along the several floors (111),
wherein a security device (11) is arranged on each of the floors (111), which security device is configured to determine data content and to transmit the data content to an assigned slave unit (5) of the data network (1), and
wherein the elevator control (113) is configured to receive data content from the master unit (3) of the data network (1) and to control a function of the elevator system (101) on the basis thereof.

## Revendications

1. Procédé pour communiquer des contenus de données à l'intérieur d'un réseau de données (1), en particulier dans une installation d'ascenseur,
le réseau de données (1) présentant une unité maître (3) et plusieurs unités esclaves (5) et l'unité maîtresse (3) et les unités esclaves (5) étant interconnectées par l'intermédiaire de chemins de communication de données (7), pour échanger des télégrammes de données (31) constitués d'une pluralité de bits,
chaque télégramme de données (31) comprenant un en-tête (33), une zone de datagrammes (35) et une somme de contrôle (37), la zone de datagrammes (35) étant configurée pour l'enregistrement en série de plusieurs datagrammes (D₁, ..., Dₙ), chaque datagramme (D₁, ..., Dₙ) comprenant un contenu de données à communiquer et la somme de contrôle (37) devant être calculée de manière univoque sur la base des bits dans le reste du télégramme de données (31),
l'unité maître (3) et les unités esclaves (5) étant connectées en série les unes aux autres en une chaîne par l'intermédiaire des chemins de communication de données (7), l'unité maître (3) transmettant sur un chemin aller de données (39) allant vers une dernière unité esclave (29) un télégramme de données (31) à une première unité esclave (27),
chacune des unités esclaves (5) excepté la dernière unité esclave (29) retransmettant un télégramme de données (31) reçu de la direction de l'unité maître (3) à une première connexion de données (23) par l'intermédiaire d'une deuxième connexion de données (25) dans la direction de la dernière unité esclave (29) et retransmettant un télégramme de données (31) reçu de la direction de la dernière unité esclave (29) à la deuxième connexion de données (25) par l'intermédiaire de la première connexion de données (23) dans la direction de l'unité maître (3),
la dernière unité esclave (29) lançant un chemin retour de données (41) en transmettant un datagramme (D₁, ..., Dₙ) reçu à une première connexion de données (23) de la direction de l'unité maître (3) de retour par l'intermédiaire de la première connexion de données (23) dans une direction vers l'unité maître (3), et
le télégramme de données (31) étant modifié par les unités esclaves (5) uniquement pendant le chemin retour de données (41),
**caractérisé en ce que**
les unités esclaves (5) présentent une unité de processeur (18) pour la retransmission et la modification du télégramme de données (31) et au moins une unité de processeur (18) est configurée pour, sur le chemin aller de données (39), lire et évaluer le télégramme de données (31) et, lorsque le télégramme de données (31) contient une demande à l'unité esclave (5) respective de transmettre sur le chemin retour de données (41) des informations à l'unité maître (3), pour commencer directement après la réception et l'évaluation de l'instruction correspondante à réunir les informations demandées.

2. Procédé selon la revendication 1,
la dernière unité esclave (29) attendant une période de temps réglable avant de lancer le chemin retour de données (41).

3. Procédé selon la revendication 1 ou 2,
le procédé comprenant :
- la réception par une unité esclave (5) d'un télégramme de données (31) provenant de l'unité maître (3) ou d'une unité esclave (5) voisine et la retransmission de parties du télégramme de données (31) pendant la réception à une autre unité esclave (5) voisine ou à l'unité maître (3).

4. Procédé selon la revendication 3,
le procédé comprenant en outre :
- le contrôle de la somme de contrôle (37) du télégramme de données (31),
- l'ajout d'un datagramme (D₁, ..., Dₙ) complémentaire derrière un dernier datagramme (D₁, ..., Dₙ) déjà enregistré dans la zone de datagrammes (35), le datagramme (D₁, ..., Dₙ) complémentaire comprenant un contenu de données devant être communiqué par l'unité esclave (5), et
- le calcul d'une nouvelle somme de contrôle (37) sur la base des bits dans le reste du télégramme de données (31) étendu par le datagramme (D₁, ..., Dₙ) complémentaire et ajout de la somme de contrôle (37) recalculée à la fin du télégramme de données (31).

5. Procédé selon l'une quelconque des revendications précédentes,
chacune des unités esclaves (5) étant configurée pour commencer activement par elle-même une communication de données avec l'unité maître (3) et pour envoyer à cette fin un télégramme de données (31) à l'unité maître (3),
chacune des unités esclaves (5) exécutant une gestion de collisions avant le commencement actif d'une communication de données et envoyant par elle-même un télégramme de données (31) uniquement lorsqu'aucun télégramme de données (31) n'est actuellement reçu et retransmis par l'unité esclave (5).

6. Procédé selon l'une quelconque des revendications précédentes, les télégrammes de données (31) étant échangés par l'intermédiaire de chemins de communication de données (7) en forme d'une ligne double torsadée (9).

7. Réseau de données pour communiquer des contenus de données à l'intérieur d'un réseau de données (1), en particulier dans une installation d'ascenseur,
le réseau de données (1) présentant une unité maître (3) et plusieurs unités esclaves (5) et l'unité maîtresse (3) et les unités esclaves (5) étant interconnectées par l'intermédiaire de chemins de communication de données (7), pour échanger des télégrammes de données (31) constitués d'une pluralité de bits,
chaque télégramme de données (31) comprenant un en-tête (33), une zone de datagrammes (35) et une somme de contrôle (37), la zone de datagrammes (35) étant configurée pour l'enregistrement en série de plusieurs datagrammes (D₁, ..., Dₙ), chaque datagramme (D₁, ..., Dₙ) comprenant un contenu de données à communiquer et la somme de contrôle (37) devant être calculée de manière univoque sur la base des bits dans le reste du télégramme de données (31),
l'unité maître (3) et les unités esclaves (5) étant connectées en série les unes aux autres en une chaîne par l'intermédiaire des chemins de communication de données (7), l'unité maître (3) présentant une unité de processeur maître (17) et au moins une connexion de données (19) et chacune des unités esclaves (5) présentant une unité de processeur (18) et une première et une deuxième connexion de données (23, 25), l'unité maître (3) étant configurée pour transmettre sur un chemin aller de données (39) allant vers une dernière unité esclave (29) un télégramme de données (31) à une première unité esclave (27) par l'intermédiaire de sa connexion de données (19),
chacune des unités esclaves (5) excepté la dernière unité esclave (29) étant configurée pour retransmettre un télégramme de données (31) reçu de la direction de l'unité maître (3) à sa première connexion de données (23) par l'intermédiaire de sa deuxième connexion de données (25) dans la direction de la dernière unité esclave (29) et pour retransmettre un télégramme de données (31) reçu de la direction de la dernière unité esclave (29) à la deuxième connexion de données (25) par l'intermédiaire de la première connexion de données (23) dans la direction de l'unité maître (3),
la dernière unité esclave (29) étant configurée pour lancer un chemin retour de données (41) en transmettant un télégramme de données (31) reçu à sa première connexion de données (23) de la direction de l'unité maître (3) de retour par l'intermédiaire de la première connexion de données (23) dans une direction vers l'unité maître (3), et
chacune des unités esclaves (3) étant configurée pour modifier le télégramme de données (31) uniquement pendant le chemin retour de données (41),
**caractérisé en ce que**
au moins une unité de processeur (18) des unités esclaves (5) est configurée pour, sur le chemin aller de données (39), lire et évaluer le télégramme de données (31) et lorsque le télégramme de données (31) contient une demande à l'unité esclave (5) respective de transmettre sur le chemin retour de données (41) des informations à l'unité maître (3),
pour commencer directement après la réception et l'évaluation de l'instruction correspondante à réunir les informations demandées.

8. Réseau de données selon la revendication 7,
la dernière unité esclave (29) étant configurée pour attendre une période de temps réglable avant de lancer le chemin retour de données (41).

9. Réseau de données selon la revendication 7 ou 8, chacune des unités esclaves (5) étant configurée pour
- recevoir un télégramme de données (31) provenant de l'unité maître (3) ou d'une unité esclave (5) voisine et retransmettre des parties du télégramme de données (31) pendant la réception à une autre unité esclave (5) voisine ou à l'unité maître (3).

10. Réseau de données selon la revendication 9, chacune des unités esclaves (5) étant configurée pour
- contrôler une somme de contrôle (37) du télégramme de données (31),
- ajouter un datagramme (D₁, ..., Dₙ) complémentaire derrière un dernier datagramme (D₁, ..., Dₙ) déjà enregistré dans la zone de datagrammes (35), le datagramme (D₁, ..., Dₙ) complémentaire comprenant un contenu de données devant être communiqué par l'unité esclave (5), et
- calculer une nouvelle somme de contrôle (37) sur la base des bits dans le reste du télégramme de données (31) étendu par le datagramme (D₁, ..., Dₙ) complémentaire et pour ajouter la somme de contrôle (37) recalculée à la fin du télégramme de données (31).

11. Réseau de données selon l'une quelconque des revendications 7 à 10,
chacune des unités esclaves (5) étant configurée pour commencer activement par elle-même une communication de données avec l'unité maître (3) et pour envoyer à cette fin un télégramme de données (31) à l'unité maître (3),
chacune des unités esclaves (5) étant configurée pour exécuter une gestion de collisions avant le commencement actif d'une communication de données et pour envoyer par elle-même un télégramme de données (31) uniquement lorsqu'aucun télégramme de données (31) n'est actuellement reçu et retransmis par l'unité esclave (5).

12. Réseau de données selon l'une quelconque des revendications 7 à 11,
les chemins de communication de données (7) étant mis en oeuvre par une ligne double torsadée (9).

13. Installation d'ascenseur (101) comprenant un réseau de données (1) selon l'une quelconque des revendications 7 à 12.

14. Installation d'ascenseur (101) selon la revendication 13,
l'installation d'ascenseur (101) présentant une commande (113) et desservant plusieurs étages (111) dans un bâtiment sous la commande de la commande (113),
le réseau de données (1) s'étendant le long des plusieurs étages (111), un dispositif de sécurité (11) étant disposé à chacun des étages (111), lequel est configuré pour déterminer des contenus de données et transmettre les contenus de données à une unité esclave (5) associée du réseau de données (1), et la commande d'ascenseur (113) étant configurée pour recevoir les contenus de données de l'unité maître (3) du réseau de données (1) et pour commander sur la base de ceux-ci une fonction de l'installation d'ascenseur (101).
